# EUROPEAN PATENT APPLICATION

(11) **EP 1 659 589 A2**
(43) Date of publication of application: **24.05.2006**
(21) Application number: 05110000.6
(22) Date of filing: 26.10.2005
(51) Int. Cl.: G11B 27/32, G11B 27/10

(54) **Information recording medium, playback apparatus, and recording apparatus**

(30) Priority: 19.11.2004 JP 2004336786
(71) Applicant: KABUSHIKI KAISHA TOSHIBA, Tokyo 105-8001 (JP)
(72) Inventor: Kikuchi, Shinichi Toshiba Corporation I.P.D., 105-8001, Tokyo (JP); Mimura, Hideki Toshiba Corporation I.P.D., 105-8001, Tokyo (JP); Tsumagari, Yasufumi Toshiba Corporation I.P.D., 105-8001, Tokyo (JP); Nakashika, Masahiro Toshiba Corporation I.P.D., 105-8001, Tokyo (JP); Taira, Kazuhiko Toshiba Corporation I.P.D., 105-8001, Tokyo (JP)
(74) Representative: Henkel, Feiler & Hänzel

(57) **Abstract**

An information recording medium to be played back by an apparatus for playing back first object data (131) recorded in accordance with a first standard, the information recording medium comprises a management area (130), and a data area (131, 132), wherein the data area is configured to store second object data (132) recorded in accordance with a second standard which is different from the first standard, and the management area (130) manages a record content of at least the second object data.

## Description

The present invention relates to an information recording medium, a playback apparatus, and a recording apparatus, which make it possible to play back a content that conforms to a plurality of DVD application standards by means of a DVD player that conforms to a DVD video standard.

Application standards relating a DVD include: a video standard (DVD video) which is a pre-authoring type video application, the video standard having a variety of video applications (such as multi-language or multi-angle); and a video recording standard (simply referred to as DVD video recording, DVD VR) which is a real time recording type video application, the video recording standard having a disk specific new function (such as a play list or a typical image). Recently, there has been established a stream recording standard which is a real time recording type stream recording application.

DVD video has become generally popular, and a film, etc., is recorded under the DVD video standard, and the disk recording the film is distributed. Thus, a device of another business type such as a personal computer is generally equipped with a DVD drive.

Further, in Japan, DVD video recording is adopted, and a DVD recorder instead of a VCR becomes a fifth generation, and is generally known. Although DVD video recording is a subset of DVD video, a file structure which is very different from that of the DVD video is provided for a reason why a target medium is different (DVD video is a ROM medium and DVD video recording is a RAM/RW medium) and for a reason why it is compatible with real time recording.

In recent years, there has been known a multiformat compatible DVD drive capable of carrying out recording or playback in any medium such as DVD-ROM and DVD-R/RW/RAM, and some DVD players can carry out DVD-R/RW/RAM playback. However, as described above, the DVD video and DVD video recording are different from each other in file structure. Therefore, although the content of the DVD video can be played back by the DVD player, the content of DVD video recording have not been successfully played back by the DVD player.

A conventional information recording apparatus has a Tip packet for converting a TS packet to a PS packet (refer to, for example, Jpn. Pat. Appln. KOKAI Publication No. 2003-228922).

However, even if the TS packet is converted to the PS packet by using the Tip packet, the content of DVD video recording cannot be played back by the DVD player.

As described above, there is a disadvantage that the conventional DVD player cannot play back a content that conforms to an application standard other than the DVD video.

It is an object of the present invention to play back a content that conforms to a DVD video recording standard by means of a DVD player.

According to an embodiment of the present invention, an information recording medium to be played back by an apparatus for playing back first object data recorded in accordance with a first standard, the information recording medium comprises:
a management area; and
a data area, wherein
the data area is configured to store second object data recorded in accordance with a second standard which is different from the first standard, and
the management area manages a record content of at least the second object data.

According to another embodiment of the present invention, a playback apparatus for producing data from an information recording medium which has first object data recorded in accordance with a first standard and has a management area and a data area, the data area being configured to store second object data recorded in accordance with a second standard which is different from the first standard, and the management area managing a record content of at least the second object data, the playback apparatus comprises:
a play back unit which plays back at least the second object data.

According to another embodiment of the present invention, a recording apparatus for recording data to an information recording medium which has first object data recorded in accordance with a first standard and has a management area and a data area, the data area being configured to store second object data recorded in accordance with a second standard which is different from the first standard, and the management area managing a record content of at least the second object data, the recording apparatus comprises:
a recording unit which records at least the second object data to the information recording medium.

This summary of the invention does not necessarily describe all necessary features so that the invention may also be a sub-combination of these described features.

The invention can be more fully understood from the following detailed description when taken in conjunction with the accompanying drawings, in which:
FIG. 1 illustrates a data structure of an information recording medium according to an embodiment of the present invention;
FIG. 2 is a diagram illustrating a relationship among a playback management information layer 10, a stream object management information layer 20, and a video object layer 23 in the data structure according to the embodiment;
FIG. 3 is a diagram showing compatibility between DVD video recording and HD DVD video;
FIG. 4 is a diagram showing CTL_PACK between the DVD video recording and the HD DVD video;
FIG. 5 is a diagram showing a file structure in a DVD_HD directory of the HD DVD video;
FIG. 6 is a diagram showing a file structure in a DVD_HD directory of the HD DVD video recording;
FIG. 7 is a diagram showing a structure of an advanced VTS/interoperability VTS;
FIG. 8 is a diagram showing a structure of playback information EX_PGC_GI of the advanced VTS/interoperability VTS;
FIG. 9 is a diagram showing the structure of the playback information EX PGC GI of the advanced VTS/interoperability VTS;
FIG. 10 is a diagram showing a structure of VTS_EVOBIT of the advanced VTS/interoperability VTS;
FIG. 11 is a diagram showing a structure of EVOB_STI of the advanced VTS/interoperability VTS;
FIG. 12 is a diagram showing a structure of AST_ATRT and SP_ST_ATRT of the advanced VTS/interoperability VTS;
FIG. 13 is a diagram showing a structure of TMAP of the advanced VTS/interoperability VTS;
FIG. 14 is a diagram showing a structure of TMAPITI of the advanced VTS/interoperability VTS;
FIG. 15 is a diagram showing a structure of TMAPI_SRP of the advanced VTS/interoperability VTS;
FIG. 16 is a diagram showing a structure of TMAPI of the advanced VTS/interoperability VTS;
FIG. 17 is a diagram showing a structure of CLT_PCK to be placed at the beginning of EVOB;
FIG. 18 is a diagram showing a structure of GCI in the CLT_PCK;
FIG. 19 is a diagram showing a structure of EX_PCI;
FIG. 20 is a diagram showing a structure of EX_DSI;
FIG. 21 is a diagram showing a structure of EX_RDI;
FIG. 22 is a diagram showing a structure of TMAP of contiguous EVOB;
FIG. 23 is a diagram showing a structure of TMAP of interleaved EVOB;
FIG. 24 is a whole block diagram depicting a DVD recorder;
FIG. 25 is a flowchart showing a whole operation process of the DVD recorder;
FIG. 26 is a flowchart illustrating an example of the contents of an editing process shown in FIG. 25;
FIG. 27 is a flowchart illustrating an example of the contents of an initial setting process shown in FIG. 25;
FIGS. 28A and 28B show a flowchart illustrating an example of a recording operation of the recorder shown in FIG. 24;
FIG. 29 is a flowchart illustrating an example of the contents of a buffer fetch process shown in FIG. 28B;
FIG. 30 is a flowchart illustrating a process of creating AVFI included in a recording end process shown in FIG. 28B;
FIG. 31 is a flowchart showing a detail on an STI creation process shown in FIG. 30;
FIG. 32 is a flowchart showing a detail on a process of creating PGC included in the recording end process shown in FIG. 28B;
FIG. 33 is a flowchart showing the whole playback operation of the recorder;
FIG. 34 is a flowchart showing a detail on a decoder setting process included in the whole playback operation shown in FIG. 33;
FIGS. 35A and 35B show a flowchart showing a detail on a process of playing back cells during the whole playback operation shown in FIG. 33;
FIG. 36 is a flowchart showing a process of creating an interoperability VTS during the recording end process shown in FIG. 28B;
FIG. 37 is a flowchart showing an operation in the case of playing back a DVD VR disk by a DVD player;
FIG. 38 is a flowchart showing an authoring process for the HD DVD video; and
FIG. 39 is a block diagram depicting an authoring system for the HD DVD video.

An embodiment of an information recording medium, playback apparatus, and recording apparatus according to the present invention will now be described with reference to the accompanying drawings.

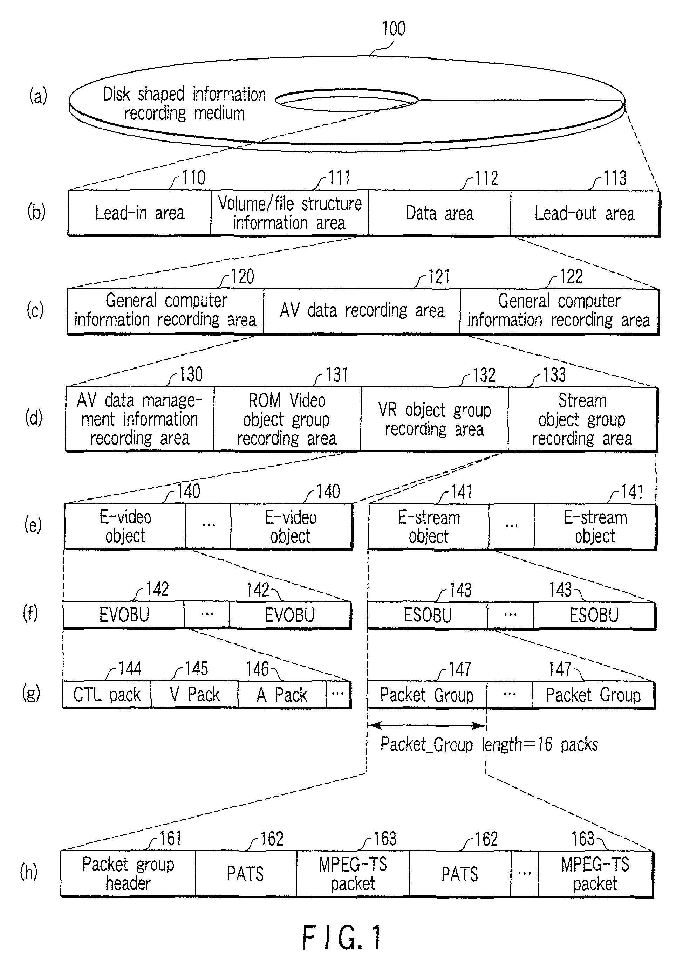

FIG. 1 is a diagram illustrating a data structure of an information recording medium according to one embodiment. A disk-shaped information recording medium 100 (FIG. 1 (a)) includes a recordable optical disk such as DVD-RAM, DVD-RW, or DVD-R and a recordable magnetic disk such as a hard disk. In the following, a description will be done by way of example of a rewritable optical disk such as DVD-RAM.

The optical disk 100 has a lead-in area 110, a volume/file structure information area 111, a data area 112, and a lead-out area 113 from its inter periphery side to its outer periphery side (FIG. 1 (b)). A file system is stored in the volume/file structure information area 111. The file system includes information indicating what file is recorded and where the file is recorded. A record content is stored in the data area 112 (FIG. 1 (c)).

The data area 112 is divided into: areas 120 and 122 in which general computer information is recorded; and an area 121 for recording AV (audio/video) data. The AV data recording area 121 includes: an AV data management information area 130 in which VMMG_IFO file for managing audio/video data (two types of files for DVD video recording and for DVD video) and a VTS_IFO file exist; a ROM video object group recording area 131 in which a DVD video object file (VOB file) is recorded; a VR object group recording area 132 in which an object data (VOBS: Video Object Set) file (VRO file) on DVD video recording is recorded; and a recording area 133 in which a stream object data (SOBS) file (SRO file) having recorded therein an object compatible with a digital broadcast (SOBS: Stream Object Set) is recorded (FIG. 1 (d)). Namely, in this embodiment, a video object, a video recording object, and a stream object are recorded as different objects.

Each of the ROM video object group recording area 131 and the VR object group recording area 132 includes enhanced video objects (E-video objects) 140. The stream object group recording area 133 includes enhanced stream objects (E-stream objects) 141 (FIG. 1 (e)).

The E-video object 140 is configured by collecting one or more enhanced video object units (EVOBU: Enhanced Video Object Unit) 142 which are data units serving as units for access to the disk 100 (FIG. 1 (f)). The E-stream object 141 is also configured by collecting one or more enhanced stream object units (ESOBU) 143 which are data units serving as units for access to the disk 100 (FIG. 1 (f)).

Each video object unit EVOBU 142 includes a control pack 144; and one or more video packs 145 and video packs 146 (FIG. 1 (g)). Each stream object unit ESOBU 143 is configured by collecting one or more packet groups (Packet_Groups) 147 configured by a collection of a plurality of TS packets (FIG. 1 (g)).

The packet group 147 consists of 16 packs, and can be composed of a packet group header 161, a plurality of MPEG-TS packets 163 (for example, 85 packets); and a plurality of packet arrival time stamps (PATS) 162 (for example, 84 stamps) (FIG. 1 (h)).

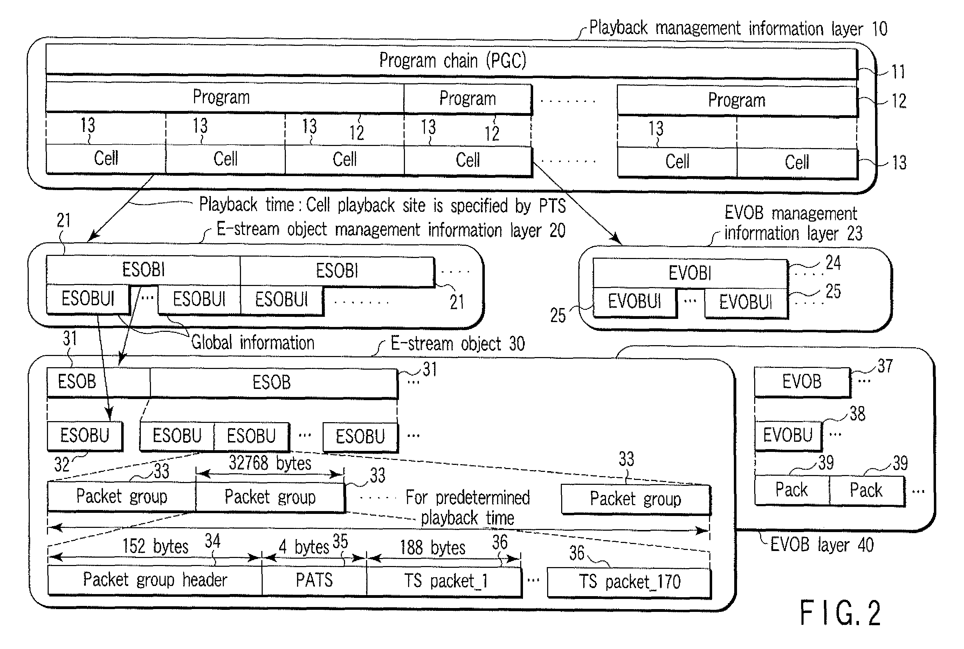

FIG. 2 is a diagram illustrating a relationship among a playback management information layer 10, a stream object management information layer 20, and a video object layer (EVOB) 23 in the data structure according to the embodiment of the invention. Management information (VMG file) recorded in the AV data management information recording area 130 shown in FIG. 1 has the playback management information layer 10 for managing procedures for playing back both of an object and a stream recording object based on both of a video standard and a video recording standard.

That is, a program 12 is configured by collecting one or more cells 13 which are playback units of a recorded object, and a list (playback procedures) of these programs 12 is managed based on management information (PGCI) on a program chain (PGC) 11.

Even when playback is started in the middle of the stream recorded cells 13 or even when playback is started in the middle of recordable cells 13 (including the video standard and the video recording standard), a user can specify a playback site at a playback time stamp (PTS).

That is, when playback is started in the middle of the cells 13 at the playback time stamp (PTS), a stream object (ESOB) 31 included in a stream object layer 30 is specified via stream object information (ESOBI) 21 included in the stream object management information layer 20; and a stream object unit (ESOBU) 32 included in the stream object layer 30 is specified via stream object unit information (ESOBUI) 22 included in the stream object management information layer 20. When the stream object (ESOBU) 31 and its stream object unit (ESOB) 32 are specified, a playback start site is specified. The stream object unit information (ESOBUI) 22 may be referred to as global information 22.

The stream object unit (ESOBU) 32 includes one or more packet groups 33. The stream object unit (ESOBU) 32 corresponds to one or two GOPs, for example. Alternatively, this unit is between the beginning of I picture and the beginning of I picture which precedes by integer number. However, in the case where the delimit of GOP cannot be found, it is delimited in units which correspond to an amount of data for a maximum of one second, for example, in a playback time stamp. In this manner, the overflow of each information field is prevented.

Each packet group 33 includes 16 LB (32768 bytes) and has a packet group header 34 (152 bytes) at the beginning of the group, followed by allocation of a plurality of packet arrival time stamps (PATS) 32 (4 bytes) and a plurality of MPEG-TS packets 35 (118 bytes). Record content of stream recording is stored in these MPEG-TS packets 35.

On the other hand, when playback is started in the middle of the video recorded cells 13 at a playback time stamp (PTS), a video object (EVOB) included in an EVOB layer 40 is specified via video object information (EVOBI) 24 included in the video object (EVOB) management information layer 23; and a video object unit (EVOBU) 38 included in the EVOB layer 40 is specified via video object unit information (EVOBUI) 25 included in the EVOB management information layer 23. When the video object (EVOB) 37 and its video object unit (EVOBU) 38 are specified, a playback start site is specified. The video object unit (EVOBU) 38 includes a plurality of packs 39, and the content of DVD video recording or the content of DVD video is stored in these packs.

In the present application, new management information Video Title Set (VTS) for managing data that conforms to the video recording standard is created so as to enable playback by a DVD player that conforms to the video standard. Thus, the object data which conform to the video recording standard is also changed to a format which can be played back by the DVD player that conforms to the video standard.

A particularly large difference between the video standard and the video recording standard is as follows. Here, a standard for a next generation high definition DVD (HD DVD) instead of a current generation DVD will be described by way of example.
(1) A recorder for HD DVD video recording has time map information TMAPI as VOB management information. This information is provided as information for dividing VOB/SOB by VOBU/SOBU, and enabling playback or special playback, etc., in units thereof. A time map (Time MAP) is provided as a data table used for conversion from a playback time stamp included in movie VOB to a VOBU address included in VOB.
   In addition, an HD DVD video has search information in a DSI packet included in NV-PACK in an object, and is compatible with special playback.
(2) Object attribute information is set in units of VTS in the HD DVD video, whereas the information is set as STI in units of VOB in the HD DVD video recording.
(3) Although the HD DVD video contains a management pack (NV pack) included in VOBU in an object, that pack does not exist in the DH DVD video recording, and an RDI pack is inserted. The content of data is different depending on an real-time data information (RDI) pack and the NV pack, and no compatibility exists. The NV pack contains menu data, special playback search pointer information (SRI) and the like, whereas the RDI does not contain them.

In order to overcome these differences, the following points are changed.

### Changes of the HD DVD video recording

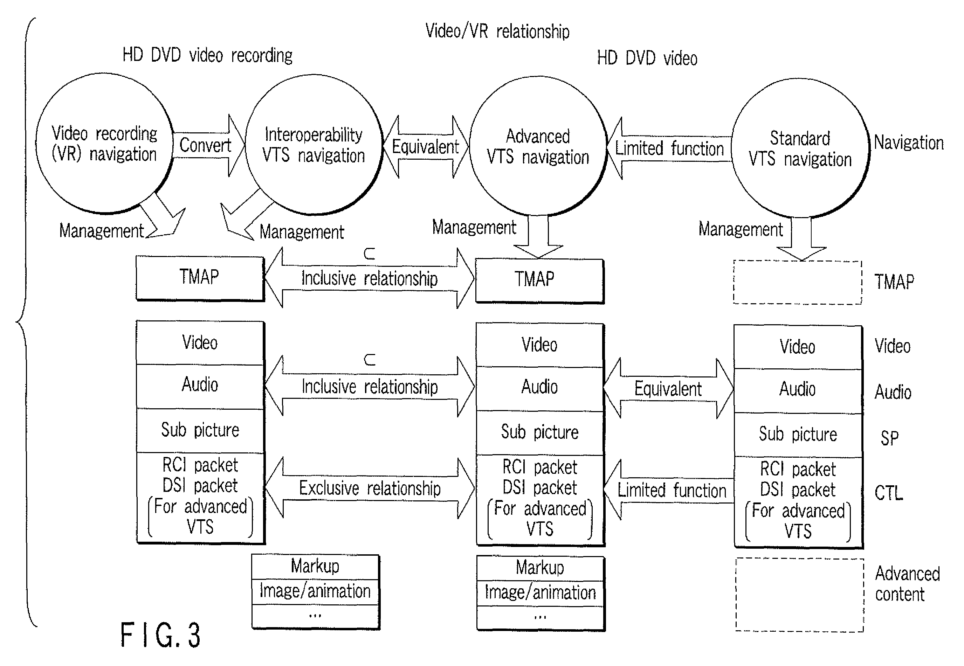

(1) As shown in FIG. 3, an interoperability video title set (interoperability VTS: Same as advanced VTS in terms of format) is defined in addition to video recording management information (navigation information) for playing back an object of HD DVD video recording. The interoperability video title set is created form the video recording management information. However, the interoperability video title set is converted from the video recording management information so as to be created as simply as possible. The interoperability VTS is equivalent to the management information VTS of DVD video (DVD advanced video).
(2) An object becomes a subset so as to enable playback by the HD DVD video as much as possible. An RDI pack is integrated with an NV pack, and a control (CTL) pack is produced. Changes of the HD DVD video
(3) While a conventional management method is left (standard VTS), and a new management method VTS (advanced VTS) is defined apart from the conventional method. This advanced VTS is formed in such a manner that the HD DVD video recording management method is adopted (TMAP and VOB_STI are added).
(4) In order to add advantageous effect of a menu or the like in a disk, an XML (or Java) file is newly prepared, and that process is preferentially executed.

The above changes are made by virtue of the reasons below:
The first change (1) is based on the reason that the management information for the HD DVD video recording cannot be played back as the management information for the HD DVD video as is. Thus, only object playback is enabled by creating an intermediate file (interoperability VTS) of the management information for the HD DVD video and for HD DVD video recording.
The second change (2) is based on the reason that management is enabled by only change of management information.
The third change (3) is based on the reason that an efficient management method of HD DVD video recording is adopted.
The fourth change (4) is based on the following reason. Conventionally, menu information included in the NV pack is deleted in order to maintain compatibility with HD DVD video recording, thereby making it necessary to provide menu data. Currently, menu data is created by a general (universal) XML (or Java) so as to enable playback of each VTS from that XML file.

As shown in FIG. 3, a relationship between the HD DVD video and the HD DVD video recording is established as a system of maintaining playback compatibility via interoperability VTS/advanced VTS. An object of HD DVD video recording is managed in collaboration with video recording intrinsic management information and interoperability VTS so as to enable playback from either of them.

In the HD DVD video, the conventional management method VTS is defined as a standard VTS so as to maintain compatibility with a current DVD video. Further, in the HD DVD video, in order to provide a new advantageous effect to a DVD video (such as providing necessary data by providing access to home page, DVD data merge, overlay, or version upgrading, for example), an XML (or Java) file is added for the purpose of object control, and advanced VTS adopting a management method for DVD video recording is further defined. In the case where object controls coexist in advanced VTS and XML (or Java) file, an operation of the XML (or Java) file is preferentially made.

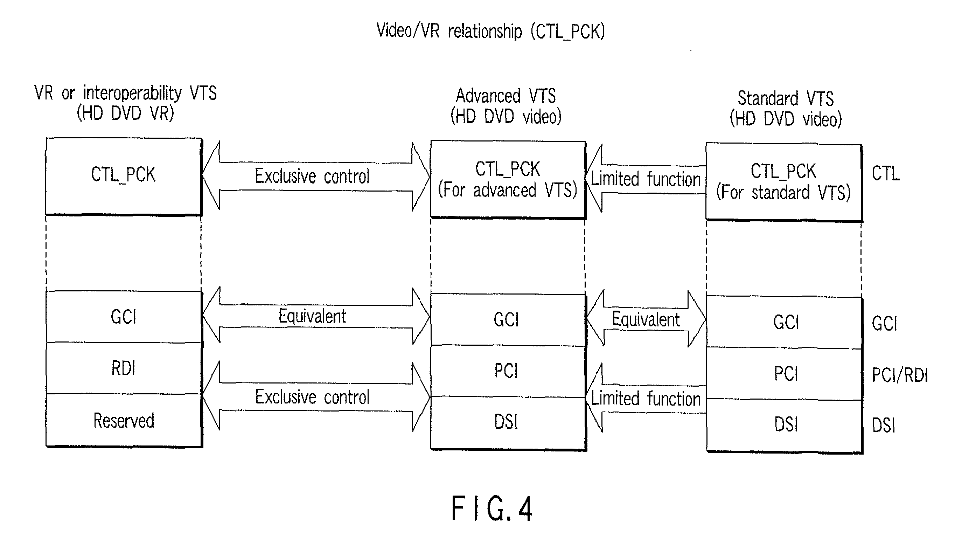

In addition, at the side of the HD video recording, the interoperability VTS is defined for the purpose of compatibility with the HD DVD video. This VTS is created by only a converting process from the intrinsic management data for the HD DVD video recording. Further, the constituent elements of a control pack (CTL-PACK) in an object include, as shown in FIG. 4, necessary one of four types of: general control information (GCI) packet used in common in all types of VTS; a video recording real-time data information (RDI) packet; a DVD video presentation control information (PCI) packet; and a data search information (DSI) packet.

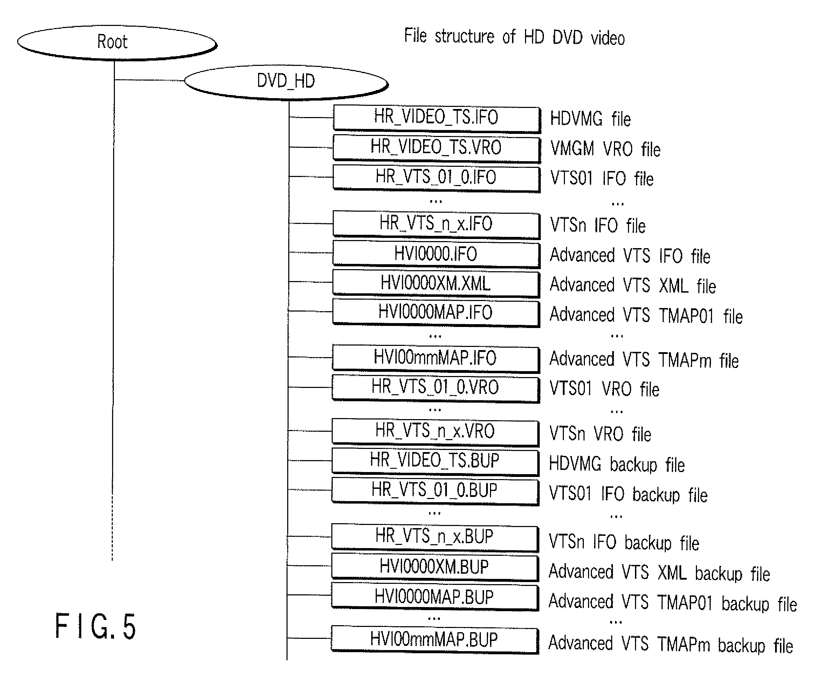

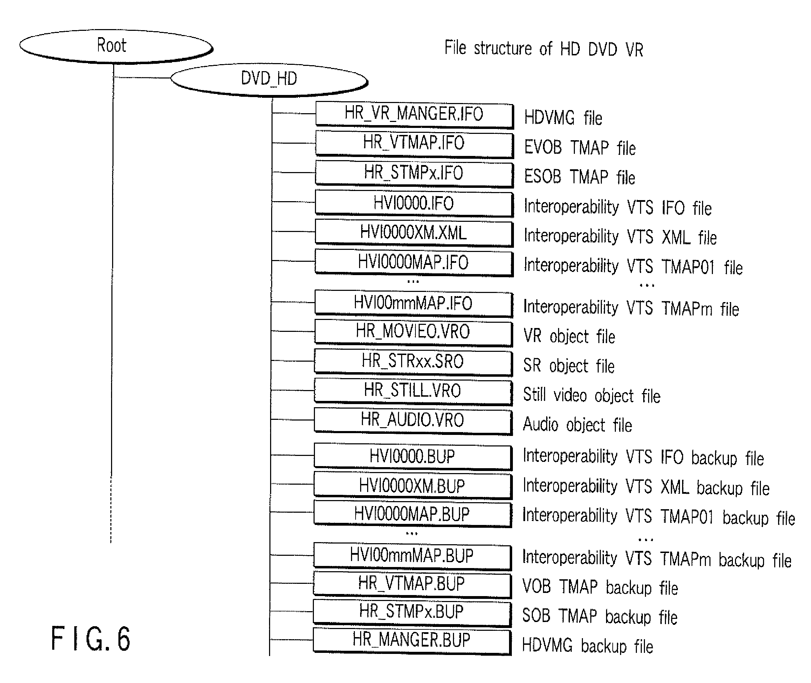

In the HD DVD, a common directory of DVD video and DVD video recording is provided under a root. In the DVD_HD directory, as shown in FIGS. 5 and 6, there exist either of the files for HD DVD video (ROM video) and HD_DVD video recording (recording and playback DVD), and both of these files do not exist at the same time.

FIG. 5 shows a file structure of a DVD_HD directory of the HD DVD video. The file structure includes an HDVMG file, a VMGM VRO file, a VTS01 IFO file, ... a VTSn IFO file, an advanced VTS IFO file, an advanced VTS XML (or Java) file, an advanced VTS TMAP01 file, ... an advanced VTS TMAPm file, a VTS01 VRO file, ... a VTSn VRO file, an HDVMG backup file, a VTS01 IFO backup file, ... a VTSn IFO backup file, an advanced VTS XML backup file, an advanced VTS TMAP01 backup file, ..., and an advanced VTS TMAPm backup file.

FIG. 6 shows a file structure of a DVD_HD directory of the HD DVD video recording. The file structure includes an HDVMG file, an EVOB TMAP file, an ESOB TMAP file, an interoperability VTS IFO file, an interoperability VTS XML (or Java) file, an interoperability VTS TMAP01 file, ..., an interoperability VTS TMAPm file, a VR object file, an SR object file, a still video object file, an audio object file, an interoperability VTS IFO backup file, an interoperability VTS XML backup file, an interoperability VTS TMAP01 backup file, ..., an interoperability VTS TMAPm backup file, a VOB TMAP backup file, an SOB TMAP backup file, and an HDVMG backup file.

Namely, in the DVD video recording, there are recorded under DVD_HD directory: an HDVMG file and a TMAP file for managing data; an interoperability VTS_IFO file for compatibility with a DVD video; a VR object file which is an object file for analog recording such as analog broadcast and line input; and an SR object file which is a digital broadcast object. The SR object file is recorded as an ESOBS (EStream Object Set: a set of ESOBs) as shown in FIG. 2. In addition, management data is recorded in a VMG file (playback management information layer, ESOB management information layer, and EVOB management information layer) which is common to video recording, is controlled common to video recording, and is linked in units of cells. A playback site is specified in units of playback time stamps. In the DVD video, as shown in FIG. 5, there are recorded under DVD_HD directory: an HDVMG file for managing a disk; a VTS_IFO file for controlling a title; an EVOB_VRO file which is a title object file; and an XML file for adding menu creation and a playback effect. Each title is linked in units of cells, and a playback site is specified in units of playback time stamps.

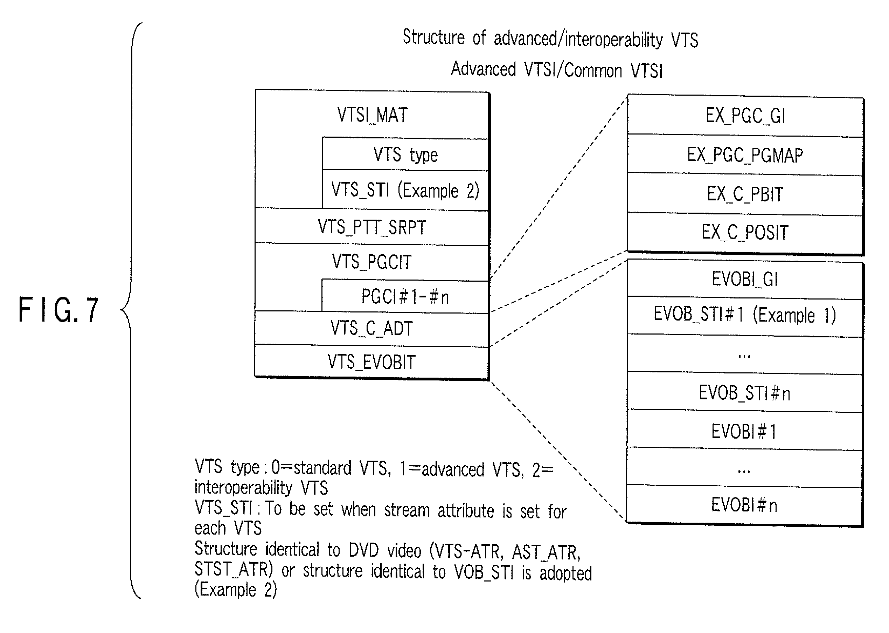

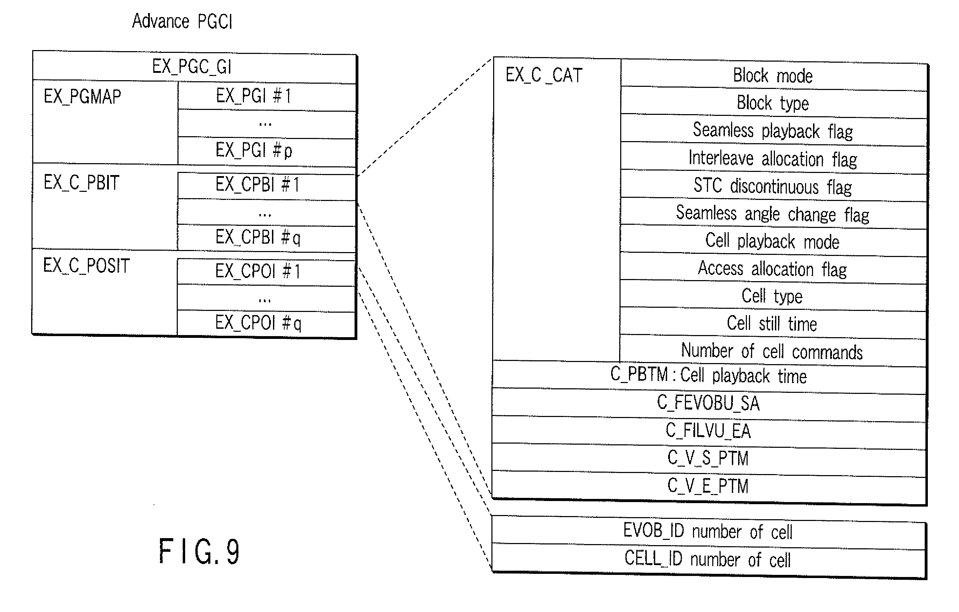

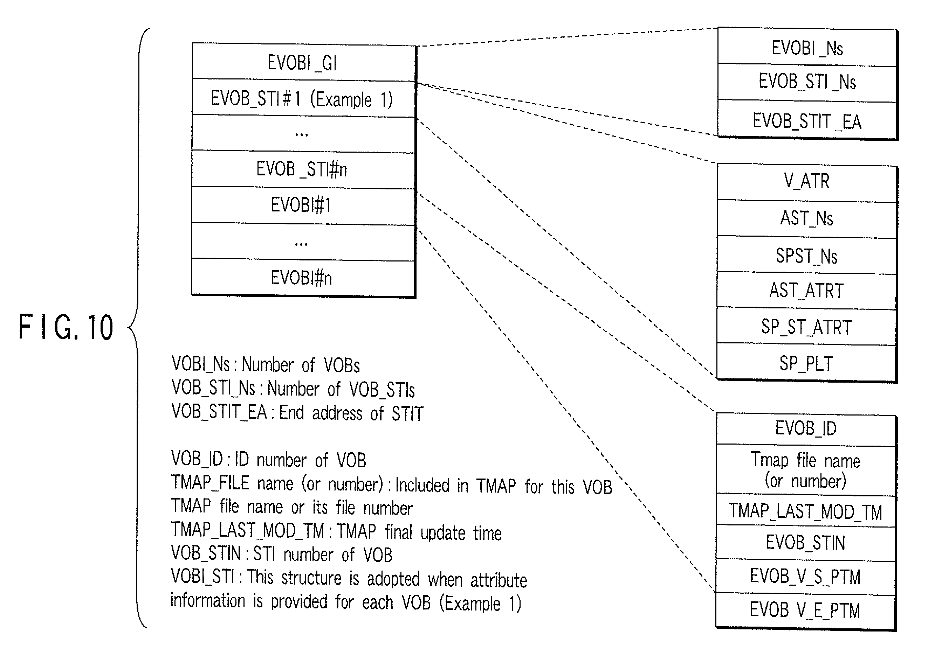

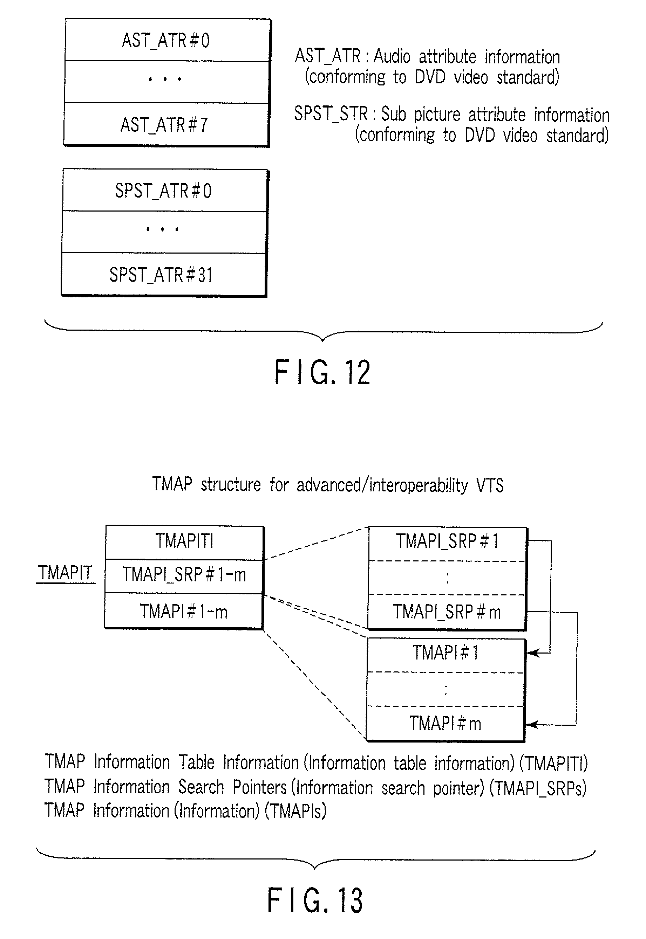

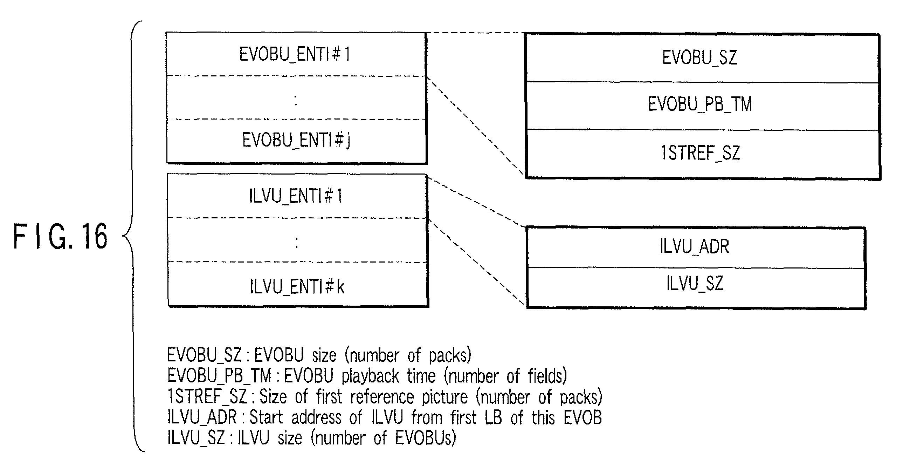

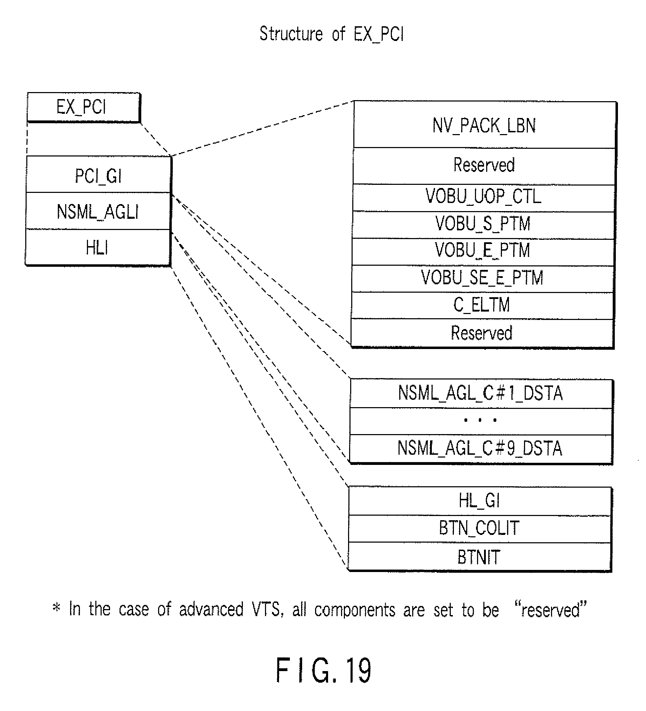

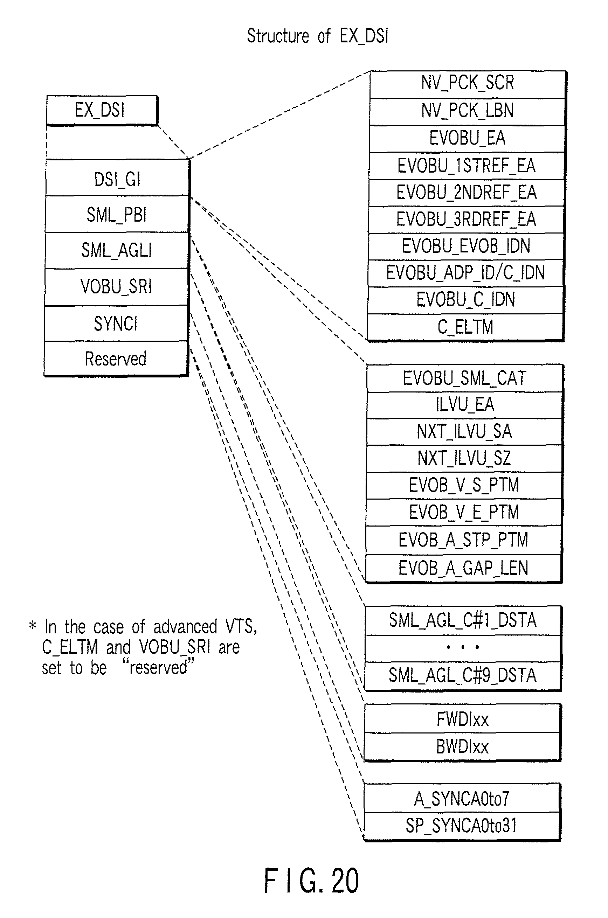

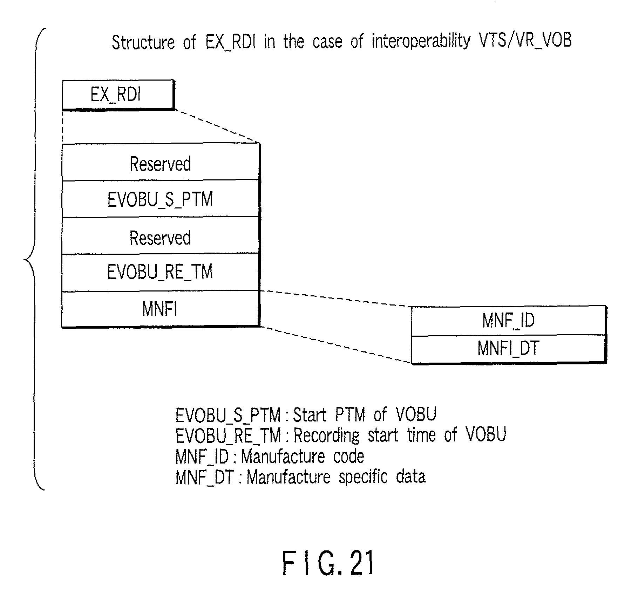

Management information will be described below with reference to FIGS. 7 to 23.

A structure of advanced VTSI/interoperability VSTI, as shown in FIG. 7, includes: VTSI_MAT, VTS_PTT_SRPT; VTS_PGCIT; VTS_C_ADT: and VTS_EVOBIT. However, with respect to VTS_EVOBIT, this structure is divided depending on whether stream attribute information is in units of VTS (DVD video) or in units of VOB (video recording). Example 1 is provided an example in which attribute information is described in units of VOB, and Example 2 is provided as an example in which attribute information is described in units of VTS.

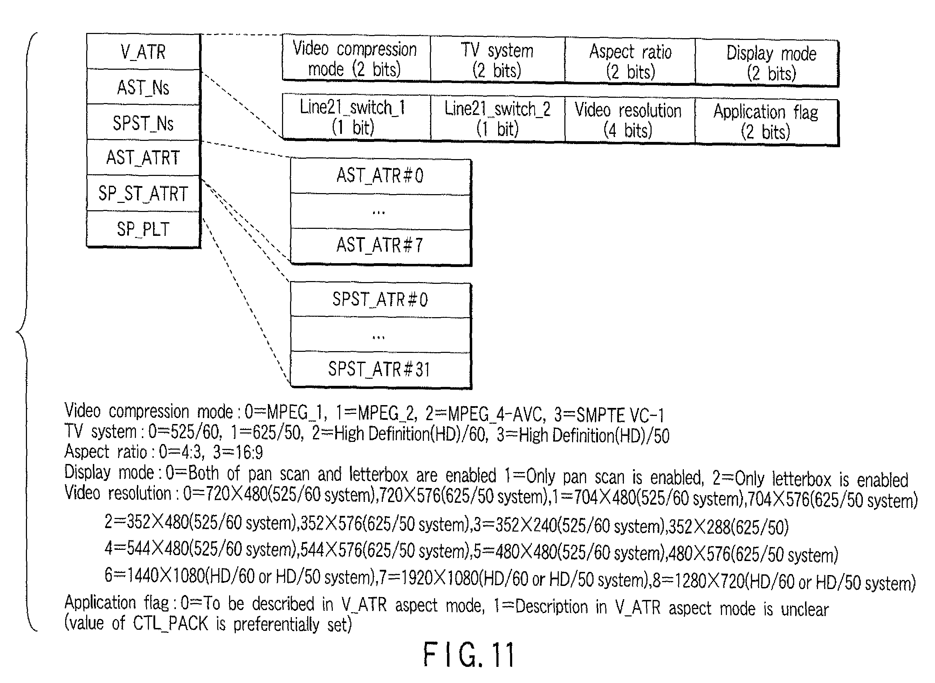

In the case where a stream attribute is changed only in units of VTS, it becomes possible to describe the attribute information in VTS_MAT. A structure of the VTS_STI (VTS attribute information) is believed to be provided in a case of adopting a structure which is identical to the DVD video and a case of adopting a structure (FIG. 11) identical to video recording.

In the case where a stream attribute is changed in units of VOB, as shown in FIG. 7, EVOBI_GI, EVOB_STI (one or more), and EVOBI exist in EVOBI by EVOB number. EVOBI_GI includes EVOBI number, STI number, and a final address of an STI group.

STI includes V_ATR, AST_ATR, SPST_ART, and SP_PLT, as shown in FIG. 11. Although the item of each attribute is identical to video recording STI, video resolution for HD DVD is added for use in HD DVD, and a compression systems MPEG 4 and VC-1 are also added. As described above, a compression system, type of sampling frequency, SP resolution, and a compression system may be increased for AST_ATR and SPST_ART as well.

EVOBI includes: EVOB_ID; Tmap file information; STI number (EVOB_STI_Ns) which EVOB uses; EVOB start PTM (EVOB_V_S_PTM); and EVOB end PTM (EVOB_V_E_PTM). However, with respect to EVOB_ID, VOBI number is defined as ID as is in the case where VOBI is in order of ID, and thus, it is believed that no description is given. A Tmap file name or a file number is added as Tmap file information. Further, coincidence of a TMAP file is checked based on creation date and time information TMAP LAST MOD TM. In the case where TMAP_LAST_MODE_TM included in VOBI is identical to TMAP_LAST_MOD_TM included in a TMAP file, playback is carried out because coincidence is obtained.

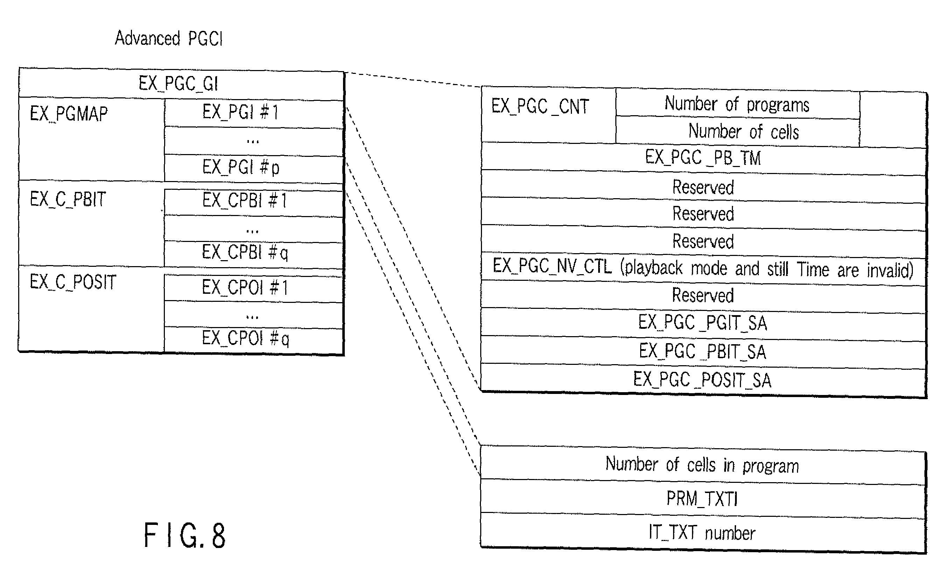

Moreover, although PGCI is provided as playback information on the advanced VTSI/interoperability VTSI, a structure of a DVD video is basically inherited here, UOP control, NV control and the like are inhibited, and the corresponding area is set to be "reserved". Therefore, as shown in FIG. 8, PGC_CMDT is deleted in PGCI; only EX_PGC_CNT, EX_PGC_PB_TM, and EX_PGC_NV_CTL are left in EX_PGC_GI, and the other items are reserved ("0" is set for reservation).

The number of cells in a program is set in EX_PGI; C_CAT having a structure identical to a DVD video, a cell playback time (C_PBTM), C_FVOB_SA (EVOBU start address is expressed by file LBN), C_FILVU_EA (end address of the first ILVU is expressed by file LBN), VOB_S_PTM, and VOB_E_PTM (playback is started with reference to TMAP and a current address is converted to end address) are set in EX_CPBI; and VOB_ID which belongs to CELL is set in EX_CPOI.

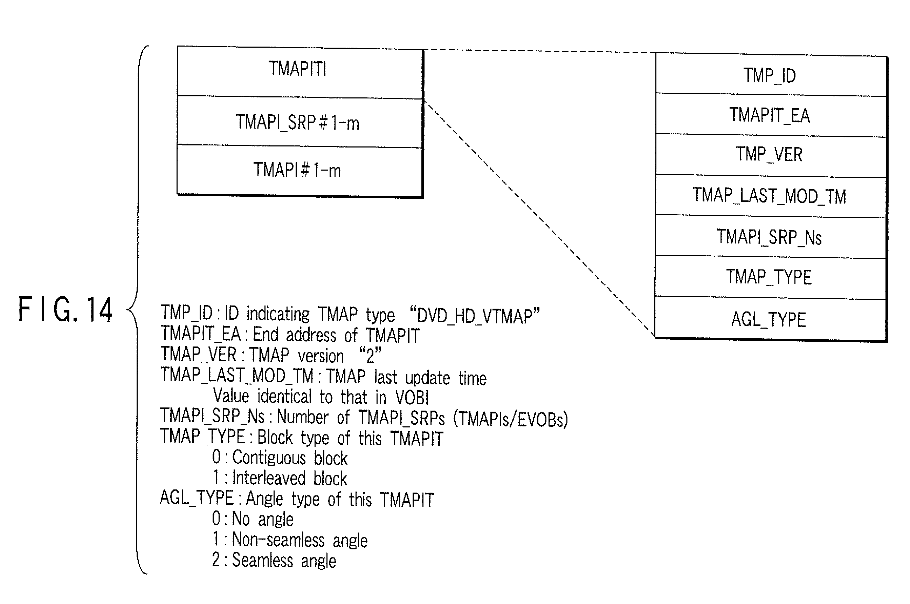

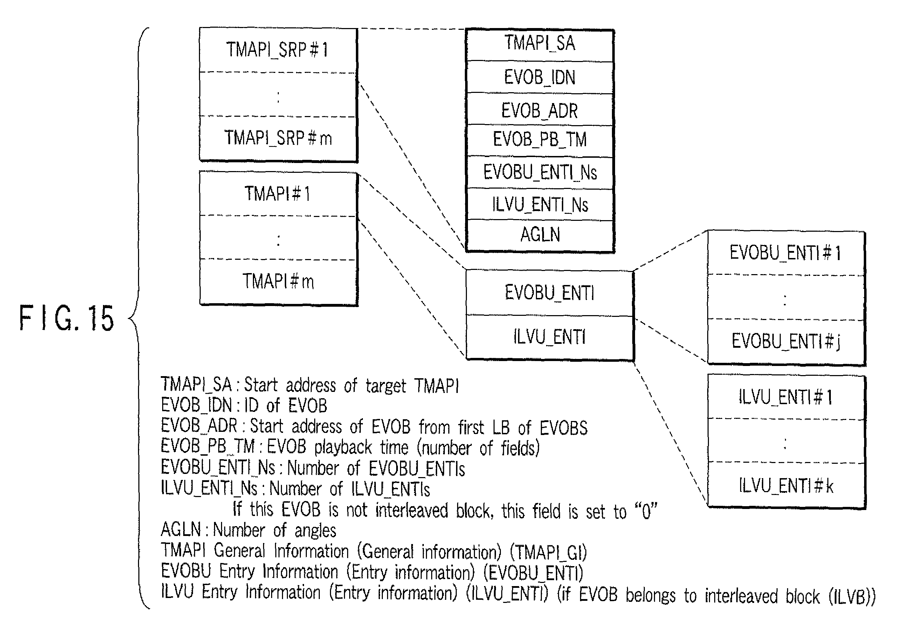

Next, TMAPT is a table composed of one or more TMAP files, and the content of the TMAP file includes one or more TMAPs which correspond to one or more VOBs. However, in the case of a seamless multi-angle, data is stored in one file. A structure of the TMAP file includes TMAP information table information (TMAPITI), TMAP information search pointer (TMAP_SRP), and TMAP information (TMAPI), as shown in FIG. 14. TMAPTI includes: TMP_ID (value indicating type of TMAP); TMAPT_EA (VTMAP end address); TMP_VER (TMAP version information); TMAP_LAST_MOD_TM (TMAPT update date and time information, value identical to MOD_TM included in VOBI); TMAP_SRPNs (total number of search information); TMAP type (interlace block or not), and angle type. One or more VTMAP_SRPs, which correspond to the number of TMAPIS, exist. VTMAP_SRP (search information of each TMAP) includes, as shown in FIG. 15: VTMAP_SA (VTMAP start address); EVOB_ID number and EVOB_ADR (start LBN of EVOB); EVOB_PB_TM (EVOB playback time); EVOBU_ENTI_Ns (total number of VOEU_ENTI); and ILVU_ENTI_Ns (total number of ILVU_ENTIs).

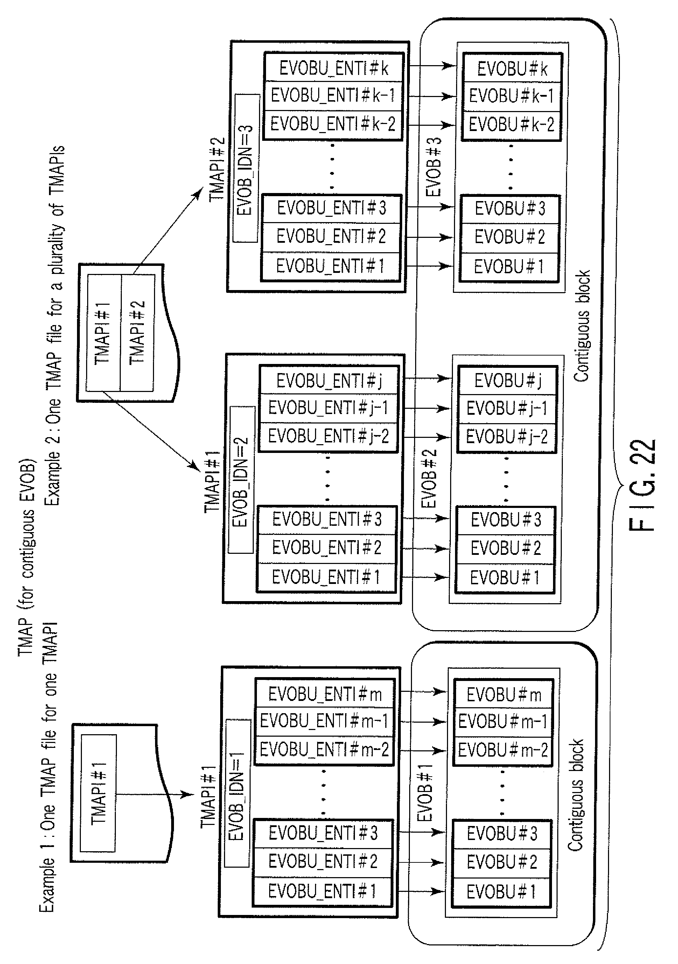

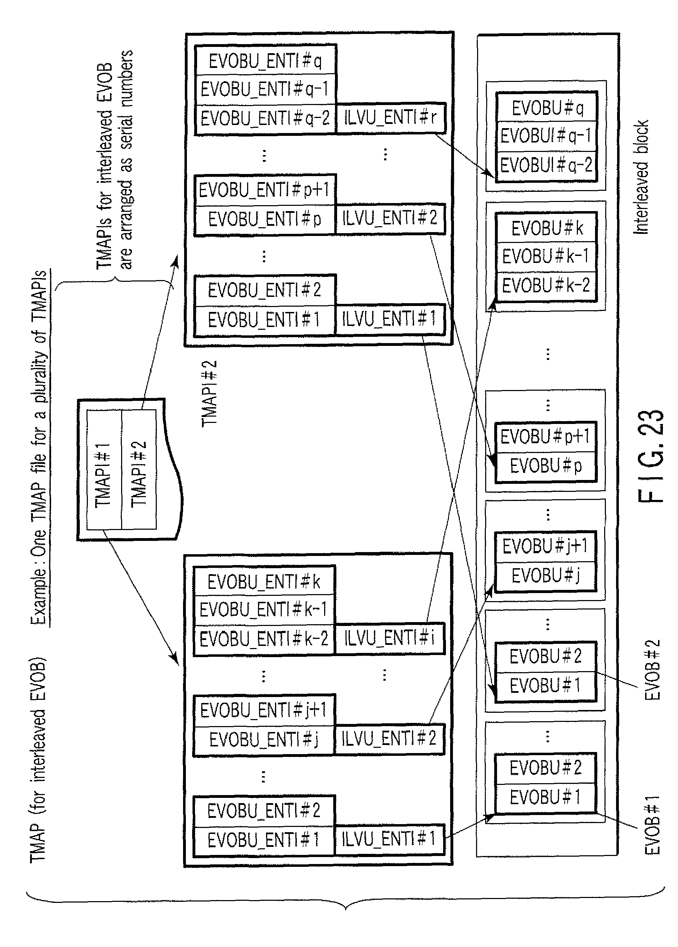

Here, a configuration of the TMAP file has two types of blocks. i.e., a contiguous block and an interleaved block, as shown in FIGS. 22 and 23. In FIG. 22, EVOB is logically continuously recorded in an object file (contiguous block). In FIG. 23, EVOB is recorded while being nested for each interleaved unit (ILVUnit) (interleaved block). Further, TMAP may be configured to be included in one file for each VOB, and TMAP of a plurality of VOBs may be configured to be included in one file. However, in the case of the interleaved block (in the case of the seamless multi-angle), there is a need for collecting TMAPs in one file.

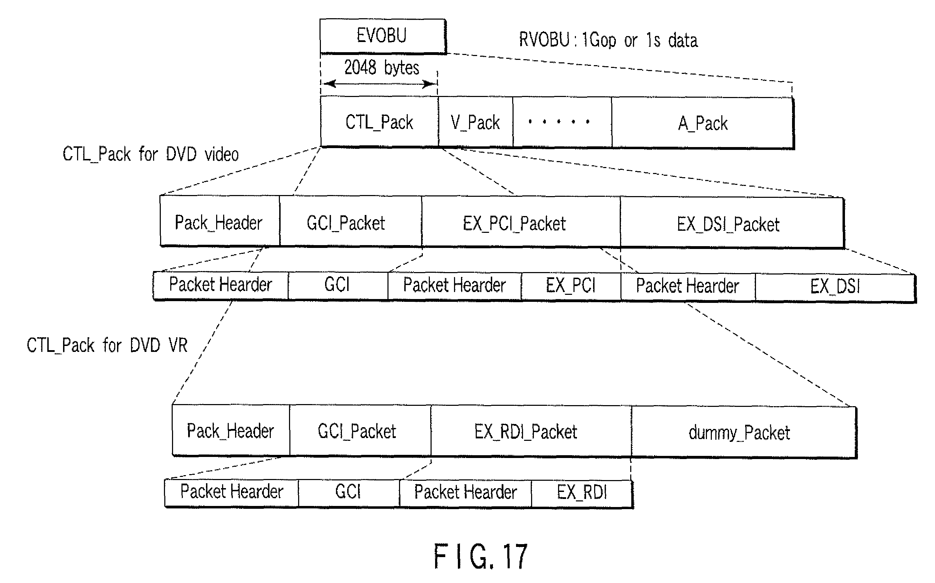

Next, in order to maintain compatibility with all VTSs in EVOB, a configuration of CLT_Pack to be placed at the beginning of VOBU includes GCI_Packet, EX_PCI_Packet, and EX_DSI_Packet, following Pack_Header in the case of a DVD video (standard VTS/advanced VTS), as shown in FIG. 17. In the case of DVD video recording (interoperability VTS/video recording intrinsic management information), the above configuration includes GCI_Packet, EX_RDI_Packet, and dummy_Packet, following Pack_Header.

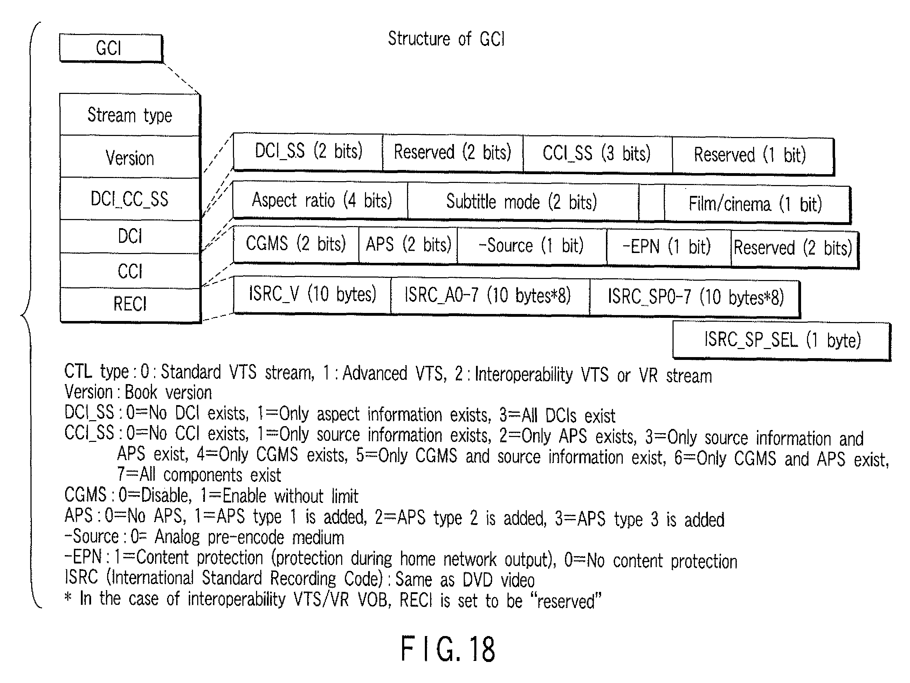

A structure of general control information (GCI) used in common in all streams (all VTSs), as shown in FIG. 18, includes: a CTL pack type, version information, DCI_CC_SS (flag indicating the presence of DCI and CCI), display control information (DCI); copy control information (CCI); and RECI (recording information). EX_PCI is configured in the content identical to PCI_Packet of the DVD video; EX_DSI is configured in the content identical to PCI_Packet of the DVD video; and EX_RDI is configured by a value other than DCI and CCI in the DVD video recording RDI_Packet.

A description of an operation according to the present embodiment will be given below.

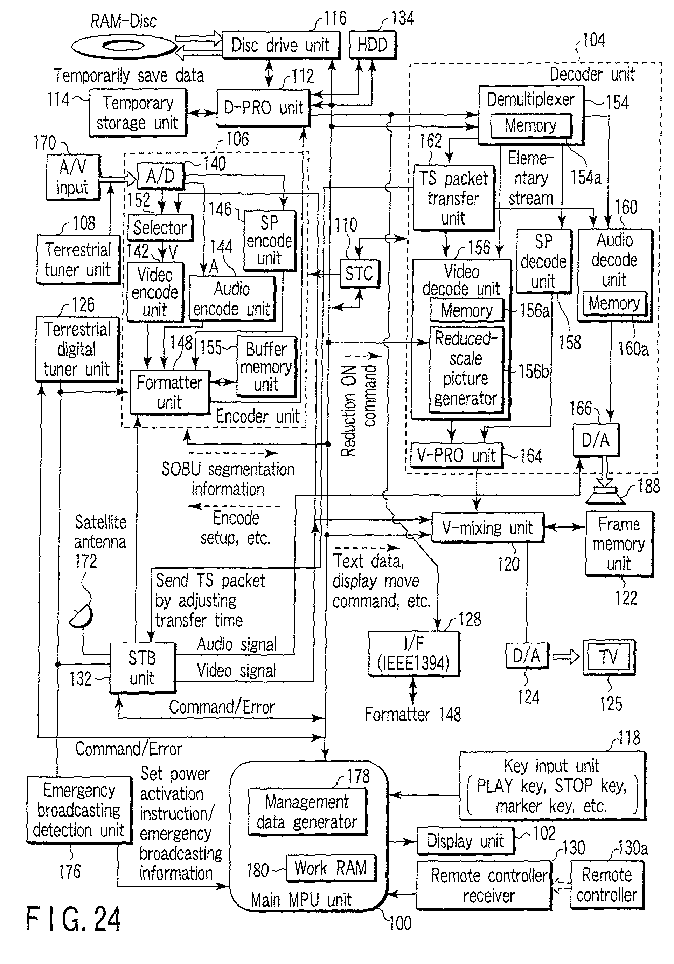

A DVD recorder which is a recording and playback apparatus according to the present embodiment, as shown in FIG. 24, includes an MPU unit 100, a display unit 102, a decoder unit 104, an encoder unit 106, a terrestrial tuner unit 108, a system time counter (STC) unit 110, a data processor (D-PRO) unit 112, a temporary storage unit 114, a disk drive unit 116, a key input unit 118, a V (video) mixing unit 120, a frame memory unit 122, a TV D/A converter unit 124, a TV image receiver 125, a terrestrial digital tuner unit 126, a digital interface unit (IEEE 1394 or Ethernet) 128, and a remote controller receiver unit 130 which receives user operation information from a remote controller 130a. Further, the DVD recorder comprises a set top box (STB) unit 132 connected to a satellite antenna 172, and a hard disk drive (HDD) unit 134. The STC unit 110 carries out counting on the basis of 27 MHz.

FIG. 24 configures an embodiment in such a manner that a streamer function is added to a DVD recorder. Thus, a block which is not used in the present application is also added. For example, an emergency broadcast detector unit 176 detects an emergency broadcast signal from the terrestrial digital tuner unit 126 or the STB unit 132, and instructs the MPU unit 100 to turn on power and to set emergency broadcast information. Further, the digital interface unit (IEEE 1394 or Ethernet) 128 is provided as a streamer in order to cope with digital input or output.

The encoder 106 includes an analog-to-digital converter unit 140, a video encoder unit 142, an audio encoder unit 144, a sub picture (SP) encoder unit 146, a formatter unit 148, a buffer memory unit 150, and a selector 152. An A/V input terminal 170 is also connected to the analog-to-digital converter unit 140. The decoder unit 104 comprises a separator unit 154 having a memory 154a, a video decoder unit 156 which incorporates a memory 156a and a unit 156b for generating a reduced image (such as thumbnail), an SP decoder unit 158, an audio decoder unit 160, a transport stream (TS) packet transfer unit 162, a video processor (V-PRO) unit 164, and an audio digital-to-analog converter unit 166. An analog output from the digital-to-analog converter unit 166 (monaural, stereo, or AAC 5.1 CH surround) is input to an AV amplifier (not shown) or the like, and a necessary number of speakers 188 are driven. Further, an antenna 172 for receiving a digital broadcast is connected to the STB unit 132.

In the meantime, in order to display the content of an image in recording on the TV 125, stream data to be recorded is sent to the D-PRO unit 112, and at the same time, the data is sent to the decoder unit 104, so that playback of the stream data can be carried out. In this case, the MPU unit 100 provides setting for the decoder unit 104 during playback, and then, the decoder unit 104 automatically carries out a playback process.

The MPU unit 100 has a management data generator unit 178 and a work RAM unit 180.

With respect to the flow of a signal at the time of recording, the TS packet data received by the STB unit 132 (or terrestrial digital tuner unit 126) is packet-grouped by the formatter unit 148, the packet-grouped data is stored in the work RAM unit 180, and the stored data is recorded in a disk at a time when a predetermined amount of the data is stored. In addition, the TS packet arrival time is counted by a PATS counter 186, and the counted arrival time is assigned to the beginning of each TS packet, and is buffered. The counter 186 finely adjusts the count by means of the SCR and does not load an SCR value as in STC.

When a TS packet is received, the received packet is grouped on a 170 by 170 packet basis, and a packet group header is produced. In this case, only the significant two bytes of PATS of the start packet in the packet group are inserted into the header, and only the least significant four bytes are stored in the other PATS together with the TS packet (before the TS packet).

Moreover, an analog signal input from the terrestrial tuner 108 or the line input 170 is converted to a digital signal by the analog-to-digital converter 140. The digital signal is input to each of the encoder units 142, 144, and 146. A video signal is input to the video encoder unit 142, an audio signal is input to the audio encoder unit 144, and character data such as character broadcast is input to the SP encoder unit 146. The video signal is MPEG-compressed, the audio signal is subjected to AC3 compression or MPEG audio compression, and the character data is subjected to run length compression.

From each of the encoder units 142, 144, and 146 (for video recording), compressed data is packetized so as to be 2048 bytes in the case where the data is packetized, and the packetized data is input to the formatter unit 148. In the formatter unit 148, each packet is packetized, the each packetized packet is further multiplexed as a program stream, and the multiplexed program stream is sent to the D-PRO unit 112.

In the D-PRO unit 112, an ECC block is formed on a 16 by 16 pack basis, error correction data is added, and the added data is recorded in a disk by the drive unit 116.

Here, when the drive unit 116 enters a busy state because of seeking in progress, a track jump and the like, data is input to the buffer memory 150, and one waits until the DVD-RAM drive unit 116 has been ready.

Further, in the formatter unit 148, each item of delimitation information is produced during recording, and a GOP start interrupt or the like is periodically sent to the MPU unit 100. The delimitation information includes the number of VOBU (SOBU) packs, an end address of I picture from the beginning of VOBU (SOBU), and a VOBU (SOBU) playback time.

In the flow of data at the time of playback, data is read out from the disk by the drive unit 116, error correction is carried out by the D-PRO unit 112, and the error corrected data is input to the decoder unit 104. The MPU unit 100 determines whether the input data type is video recording (VR) data or stream recording (SR) data, and sets the determined type for the decoder unit 104 before playback. In the case of the SR data, the MPU unit 100 determines PMT_ID to be played back from CELLI to be played back, determines PID of each item to be played back (such as video or audio), and sets the PID for the decoder unit 104. The decoder unit 104 sends each TS packet to each of the decoder units 156, 158, and 160 by means of the demultiplexer unit 154 on the basis of the PID. The each TS packet is further sent to the TS packet transfer unit 162, and, in accordance with an arrival time, the packet is transmitted to the STB unit 132 and the interface (such as IEEE 1394) unit 128 in the form of the TS packet. Each of the decoder units 156, 158, and 160 carries out decoding, converts current data to an analog signal by the digital-to-analog converter unit 124, and displays the converted analog signal on the TV 125.

In the case of the VR data, the demultiplexer unit 154 sends the data to each of the decoder units 156, 158, and 160 in accordance with a fixed ID. Each of the decoder units 156, 158, and 160 carries out decoding, converts current data to an analog signal by the digital-to-analog converter unit 124, and displays the converted analog signal on the TV 125.

In the flow of a signal at the time of recording, a signal received by the terrestrial tuner 108 is subjected to analog-to-digital conversion, and the signal is encoded by the encoder units 142, 144, and 146. Then, the encoded signal is packet-grouped at the formatter unit 148, the packet-grouped signal is stored in the work RAM 108, and the stored signal is recorded in a disk at a time when a predetermined amount of signals is stored (at a stage at which 1 or an integer multiple of data by CDA is stored).

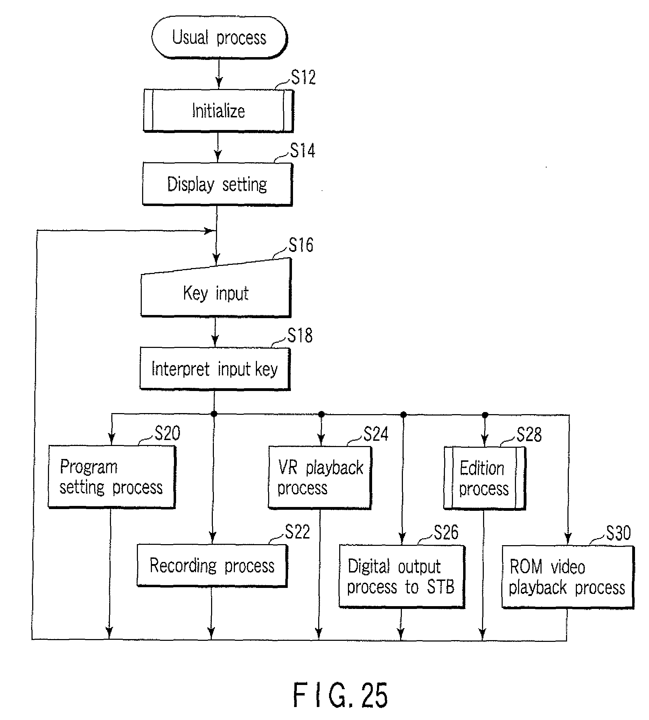

FIG. 25 is a flow chart illustrating an example of a general processing operation. For example, when the whole apparatus is powered on, the MPU unit 100 provides initial settings (at the time of factory shipment or after user setting) (step S12), provides display settings (step S14), and waits for user's key operation in step S16. When the user carries out key input from the key input unit 118 or remote controller 130a (step S16), the MPU unit 100 interrupts the content of the key input (step S18). In response to a result of the key input interruption, the following six data processes are properly executed.

That is, when a key input is, for example, a key operation relating to program setting, a program setting process is carried out in step S20. When a key input is a key operation of starting recording, a recording process is carried out in step S22. When a key input is a key operation of starting VR playback, a VR playback process is carried out in step S24. Then, processing returns to step S16 in which the recorder waits for key input. When a key input is a key operation of digitally outputting data to the STB unit 132, a digital output process is executed in step S26, and thereafter, processing returns to step S16 in which the recorder waits for key input. When a key input is a key operation of an editing process, the editing process is carried out in step S28, and then, processing returns to step S16 in which the recorder waits for key input. When a key input is a key operation of starting ROM video playback, a ROM video playback process is carried out in step S30. Then, processing returns to step S16 in which the recorder waits for key input.

Six processes in steps S20, S22, S24, S26, S28, and S30 are properly executed in parallel to each other on a task by task basis. For example, during the playback process (S24 or S30), a process of digitally output data to the STB unit 132 (S26) is executed in parallel. Alternatively, a configuration may be provided such that, during a recording process (S22) which is not a timer reservation recording process, a new program setting process (S20) is executed in parallel. Alternatively, by utilizing a feature of disk recording which can be accessed at a high speed, the playback process (S24 or S30) and the digital output process (S26) can be executed in parallel to each other during the recording process (S22). The disk editing process (S28) can be executed during recording to the HDD 134.

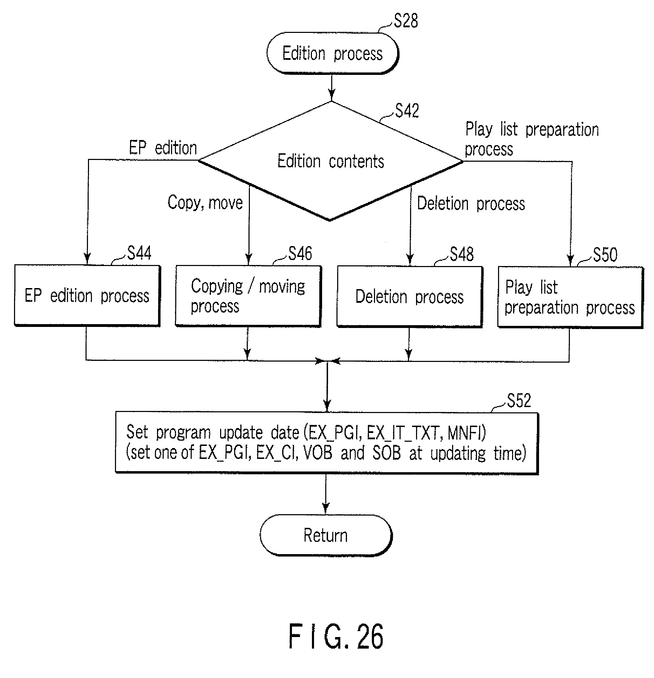

FIG. 26 is a flowchart (flow of the editing operation process) illustrating an example of the contents of the editing process (S28) shown in FIG. 25. When the editing process is started, any one of the four processes (any one of S44, S46, S48, and S50) can be started according to the edit contents (step S42). When an entry point editing process (step S44), a copy/move process (step S46), a deleting process (step S48), or a play list creation process (step S50) is completed, a program update date (EX_PGI, EX_IT_TXT, MNFI) is set. Any one of EX_PGI, EX_CI, VOB, and SOB is set at the time of change (step S52).

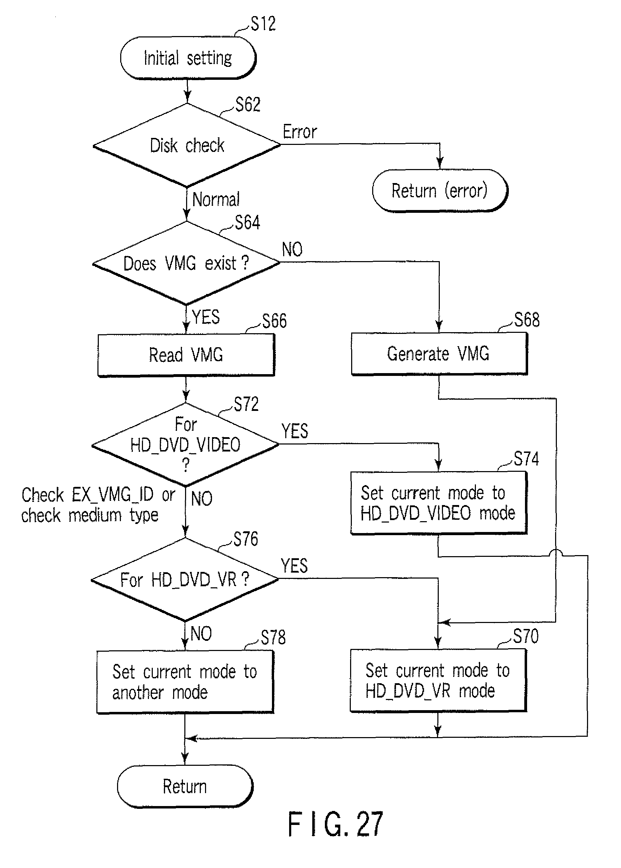

FIG. 27 is a flowchart (flow of the initial setting process) illustrating an example of the contents of the initial setting process (S12) shown in FIG. 25.

The disk is checked in step S62. If an error occurs, the fact is notified, and processing is terminated. In the case where the checked disk is normal, a search is made for a DVD_HD directory (directory in which new video recording is performed). When a directory does not exist, that directory is created, and when the directory exists, processing goes to a next step.

Next, it is determined whether or not a file has been recorded in a directory. When the check result is affirmative, it is determined whether or not the file is an HDVMG file which is its management information (step S64). When the check result is negative, the HDVMG file is created in step S68, and processing goes to step S70. When the HDVMG file has been recorded, processing goes to step S72 in which the HDVMG file is read in the work RAM unit 180 in step S66, and it is determined whether or not an HD_DVD video exists. This determination is made by checking EX_VMG_ID or medium type. In the case of the HD_DVD video, processing goes to step S74 in which an HD_DVD video mode (only reproduction) is set, and the process is terminated. When the medium is not the HD_DVD video, processing goes to step S76 in which it is determined whether or not HD_DVD video recording exists. This determination is also made by checking EX_VMG_ID or medium type. In the case of the HD_DVD video recording, processing returns to step S70 in which an HD_DVD video recording mode (recording and playback enabled) is set, and the process is terminated. When the determination result is negative in step S76, processing goes to step S78 in which another mode is set, and the process is terminated. That is, when the HDVMG file is not recorded, the HDVMG file is created (step S68), the HD_DVD video recording mode is set (step S70), and the process is terminated.

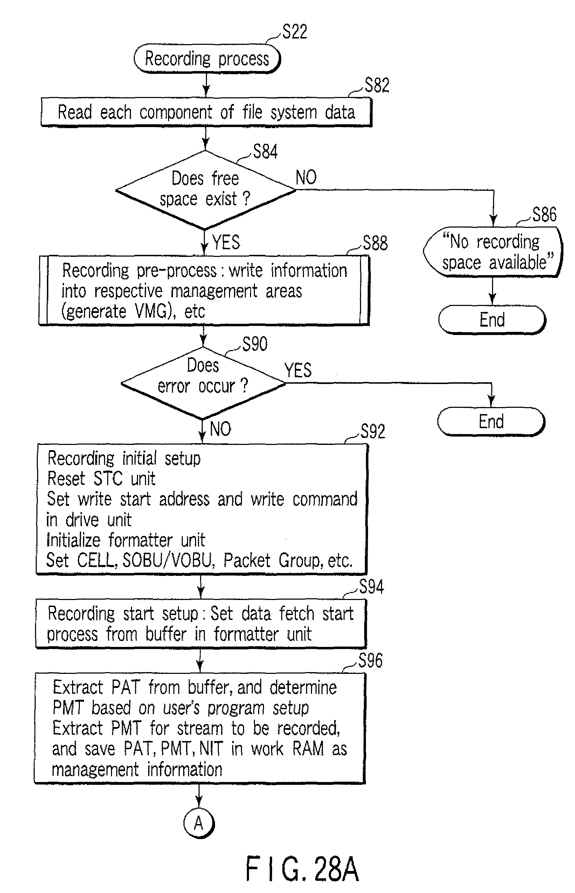

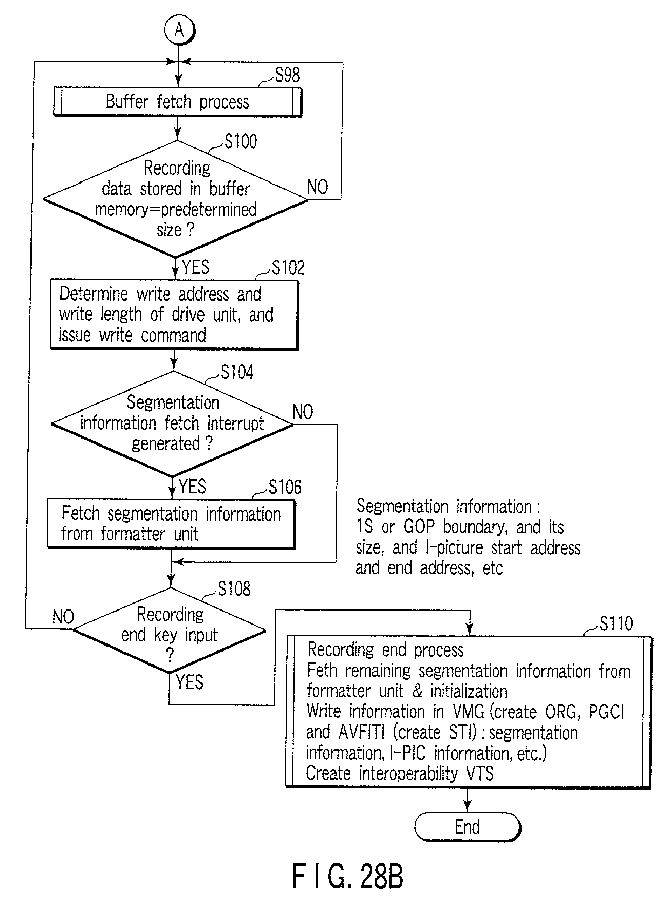

FIGS. 28A and 28B show a flowchart (flow of recording) illustrating an example of the recording operation (S22 of FIG. 25) of the recorder shown in FIG. 24. In the program setting process (S20) shown in FIG. 25, a program to be recorded is determined in advance by using electronic program guide (EPG), reception is started, and recording of the determined program is carried out.

When the MPU unit 100 receives a recording command from the key input unit 118, management data is read from the drive unit 116 (step S82), and a write area is determined. At this time, a file system is checked, and it is determined whether or not recording is enabled (whether or not a recording enable free space remains in the disk or HDD 134). When the determination result is negative (NO in step S84), the fact ("No recording space exists") is notified to the user (step S86), and the recording process is terminated.

When the determination result is affirmative (YES in step S84), a recording start position is determined on the basis of the management data read in step S82.

A management area is set so as to write data in the determined area, a write start address of video data is set in the drive unit 116, and preparation for recording data (pre-recording process: creating management information VMG) is carried out (step S88).

If an error occurs during creation of the management information VMG (YES in step S90), processing terminates. If management information VMG has been created without any error (NO in step S90), processing goes to recording initial setting (step S92).

As part of the recording initial setting, time resetting is carried out with respect to the STC unit 110. Here, the STC unit 110 is a system timer, and recording/playback (with fineness of frame units) is carried out around this timer count value.

PAT of a program to be recorded (included in MPEG-TS from the STB unit 132) is read, PID for acquiring PMT of a target program is determined, the target PMT is read, and the PID of each data item (video or audio) to be decoded (to be recorded) is determined. At this time, the PAT and PMT at the time of starting recording are stored in the work RAM unit 180 of the MPU unit 100, and they are written into management information (step S94). In addition, the HDVMG file data is written into a file system, and required information is written into the HDVMG file.

Here, the PAT may include information such as TS_ID, NETWORK_PID, and PMT_ID; the PMT may include SERVICE_ID, REG_DES_VALUE (Registration_Descriptor value), PCR_PID, and SOB_ES_Ns; and the NIT may include SERVICE_TYPE.

As part of the recording initial setting, recording setting is performed for each unit (step S96). At this time, delimitation settings of each data item (delimitation setting such as cell, ESOBU, program, and packet group) or TS packet receiving setting are performed for the formatter unit 148. Further, at this time, PID of data to be recorded is set so as to record only a target video stream. In addition, starting TS packet holding is set at the buffer memory unit 150.

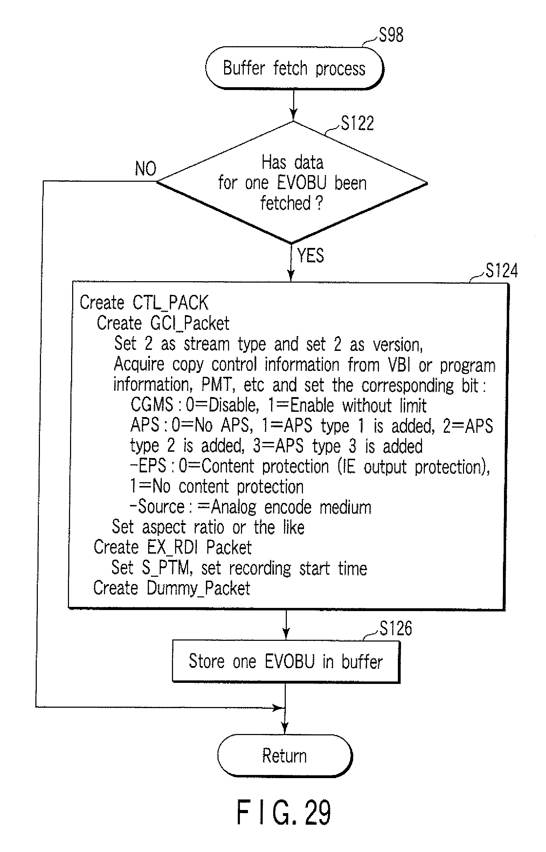

As part of the recording start setting, a buffer data acquisition start process from the buffer memory 150 is set at the formatter unit 148 (step S98). Then, the formatter unit 148 starts the buffer fetch process (described later with reference to FIG. 29).

In the case where a predetermined amount of data is stored in the buffer memory unit 150 (for one continuous data area CDA) (YES in step S100), a predetermined ECC process (creating ECC block in units of 8 sectors and 16 kilobytes or in units of 32 sectors and 4 kilobytes) is carried out through the D-PRO unit 112, and the resulting data is recorded in the disk (step S102).

During recording, delimitation information is periodically written into the work RAM unit 180 of the MPU unit 100 (before a buffer RAM (not shown) of the formatter unit 148 becomes full: YES in step S104) (step S106). The delimitation information used here is VOBU delimitation information, and includes a VOBU start address, a VOBU pack length, an I-picture start address, an I-picture end address, a playback time, and a packet arrival time stamp (PATS).

After the remaining amount of the disk (or the HDD 134) in recording has been checked. When the remaining amount is equal to or smaller than a predetermined value (for example, 150 megabytes), although not shown, a remaining free space increase process may be provided. The remaining free space increase process includes a process of, if erasable non-erased data (temporary erased file discarded in a trash file) exists on the disk, erasing the file data and increasing the remaining free space. Alternatively, the remaining free space increase process includes a process of, even in the remaining physical free space is same after reducing a recording rate (or changing MPEG-2 recording to MPEG-1 recording), increasing a recording enable time. Alternatively, in the case of recording a dummy pack for use in after-recording or the like on the disk, it is possible to carry out a process of canceling recording of the dummy pack as part of the remaining free space increase process. Alternatively, when the remaining free space of the disk 100 becomes small, it is possible to carry out a process of continuing relay recording into an unrecorded area of the HDD 134 as part of the remaining free space increase process.

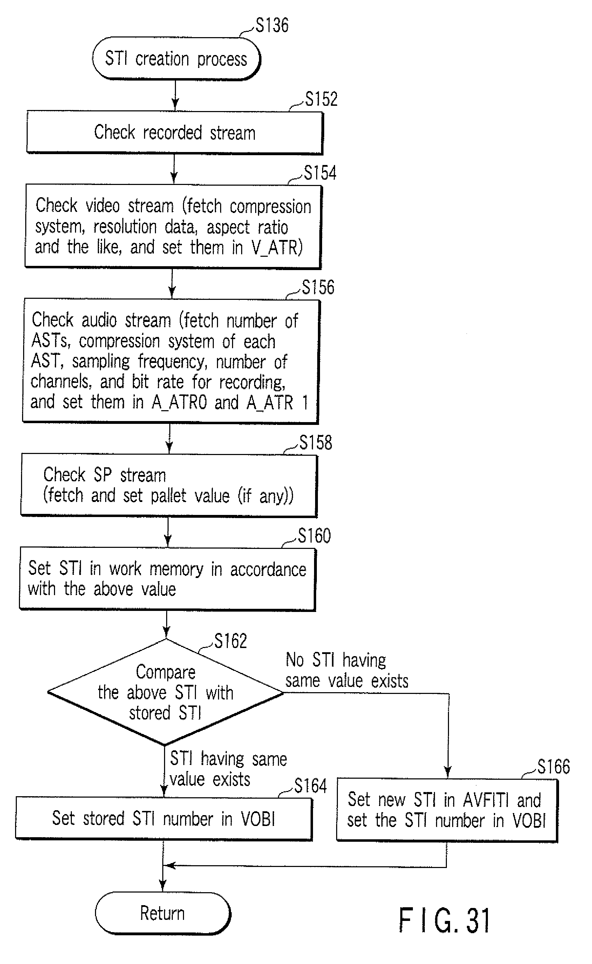

It is determined whether or not the recording has ended in step S108 (whether or not a recording end key is input or whether or not the remaining free space is absent). When the check result is affirmative (YES in step S108), the remaining delimitation information is acquired from the formatter unit 148, the acquired information is added to the work RAM unit 180, these items of data are recorded in management data (HDVMG file), and further, the remaining items of information are recorded in a file system (step S110). In this step S110, stream file information (STI) described later is created with reference to FIG. 31.

When the check result is negative (NO in step S108), processing returns to step S98 in which data acquisition (step S98) and writing (step S102) are continuously carried out.

The D-PRO unit 112 sends data to the drive unit 116 together with ECC as an ECC group by integrating data on a 16 by 16 pack basis. However, in the case where data recording in the disk is not ready, the drive unit 116 temporarily transfers the data to the storage unit 114, the recorder waits until data recording has been ready, and recording is started at a stage at which such data recording is ready. Here, a large capacity memory is presumed in order to maintain recorded data for several minutes or more at a high speed access.

However, the MPU 100 can read and write data through the MPU bus from and to the D-PRO unit 112 in order to read and write data in a file management area or the like.

FIG. 29 is a flowchart (flow of the buffer fetch process) illustrating an example of the contents of the buffer fetch process (S98) shown in FIG. 28B. In this process flow, CTL_PACK is created when data for one EVOBU is received.

In step S122, it is determined whether or not data for one EVOBU has been fetched. When the determination result is affirmative, CTL_PACK is created in step S124. DSI and CCI are created from a signal such as a VBI signal, and are set. RECI is set to be "reserved".

GCI_Packet: "2" is set in order to make the stream type being video recording, and "2" is set as a version. Copy control information is acquired from VBI or program information and PMT, and the corresponding bit is set. For CGMS, "0" is set in the case of "disable", and "1" is set in the case of "unlimited enable". For APS, "0" is set in the case where no APS is present; "1" is set in the case where APS type 1 is added; "2" is set in the case where APS type 2 is added; and "3" is set in the case where APS type 3 is added. For EPN, "0" is set in the case of content protection (IE output protection), and "1" is set in the case of no content protection. For a source, "0" is set in the case of an analog encode medium. An aspect ratio or the like is also set.

EX_RDI_Packet: S_PTM is set, and a recording start time is set. When data to be recorded for each manufacturer is present, that value is set together with company ID. The remainder is padded with Dummy_Packet.

In step S126, one EVOBU is configured with the CTL_PACK created above being at the beginning, and is temporarily stored in a buffer.

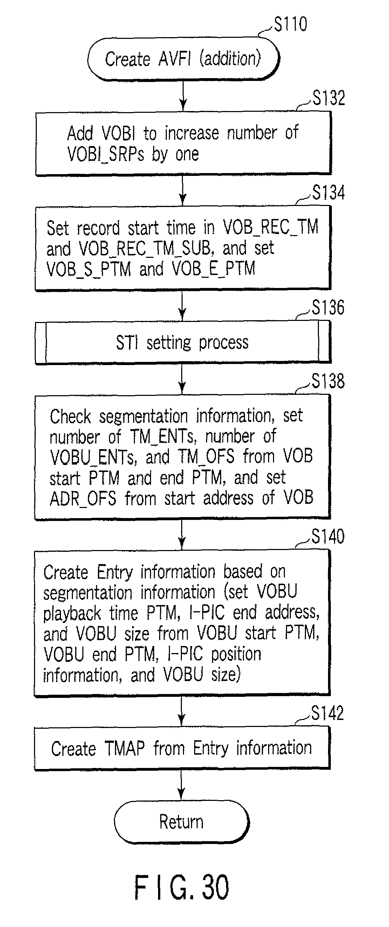

FIG. 30 shows an AVFI creation process included in the recording end process (step S110) shown in FIG. 28B.

In step S132, the number of VOBI_SRPs is increased by one to add VOBI, and an area of VOBI is allocated. "0"(means MPEG_TS) is set in PKT_TY.

In step S134, a recording start time is set in VOB_REC_TM and VOB_REC_TM_SUB, and start PTM (VOB_S_PTM) and end PTM (VOB_E_PTM) are set.

In step S136, attribute information is set in STI (the detail on this information is shown in FIG. 3).

In step S138, delimitation information is checked, and the number of TM_ENTs, the number of VOBU_ENTs, and TM_OFS are set from VOB start PTM and VOB end PTM. SDR_OFS is set from the start address of VOB.

In step S140, entry information is created from the delimitation information. Specifically, a VOBU playback time, an I-picture end address, and an EVOBU size are set from EVOBU start PTM, EVOBU end PTM, I-picture position information, and EVOBU size.

In step S142, TMAP information is created from the entry information, and this process is terminated.

FIG. 31 is an STI creation process flow showing a detail on step S136 of FIG. 30.

In step S152, a recorded stream is checked (information obtained during encoding is acquired). A stream type is divided into MPEG1 video, MPEG2 video, MPEG1 audio, MPEG2 audio ... and the like; internal data is checked in response to each type; and each item of attribute information is read out. In the case of a video stream, as shown in step S154, a compression system, resolution data, aspect ratio information and the like are acquired, V_ATR is created, and processing goes to a next step.

In the case of an audio stream, as shown in step S156, the number of audio streams, a compression system, a sampling frequency, the number of channels, a bit rate obtained during sound recording, and the like are acquired; A_ATR is created; and processing goes to a next step.

In the case of a sub picture stream, as shown in step S158, a pallet value is acquired if any; SP_ATR is created; and processing goes to a next step.

In step S160, STI is newly set in the work RAM 180 on the basis of the above attribute information.

In step S162, a current value is compared with STI which has been already stored. In the case where STI having the same value exists, the number of the stored SIT is set in VOBI, and the process is terminated in step S164. In the case where SIT having the same value does not exist, new STI is set in AVFIT in step S166, the number of that STI is set in VOBI, and the process is terminated.

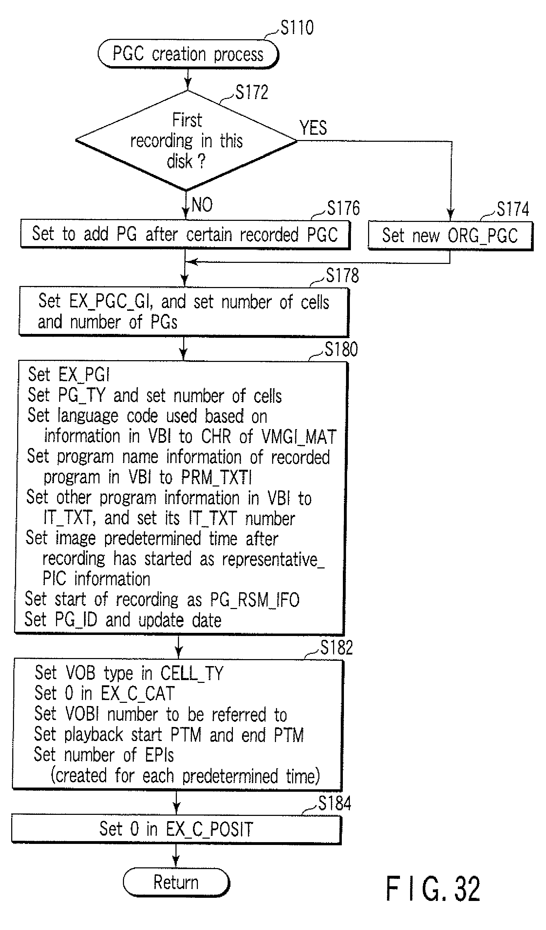

FIG. 32 shows a process of creating PGC included in the recording end process (step S110) shown in FIG. 28B.

In step S172, it is determined whether or not this disk is subjected to first recording. When the check result is affirmative, processing goes to step S174 in which ORG_PGC is newly set, and processing goes to step S178. When the check result is negative, PG is additionally set after PRG_PGC in recording in step S176, and processing goes to step S178.

In step S178, EX_PGC_GI (the number of cells and the number of PGs) is set.

In step S180, EX_PGI is set ("0" which means erasing enable is set in PG_TY, and the number of cells is set in Cell_Ns). Program title information is read based on EPG data (VBI information or HP information), and a language code "0x12" in use is set to CHR of VMGI MAT. Program name information on a recorded program in VBI is set in a second area of PRM_TXTI. Other program information included in VBI is set in IT_TXT, and that IT_TXT number is set. A picture obtained a predetermined time after recording has started is set as typical image information REP_PICTI. The beginning of recording is set as PG_RSM_IFO. A manufacturer ID of this device is set in LAST_MNF_ID. This value is set for the purpose that, in the case where any change of PGI, CI, and VOB has occurred, the manufacturer ID of the changed device is set in order to identify which manufacturer has carried out editing and recording lastly. In this manner, countermeasure if a different manufacturer has made a change can be easily taken. A PG absolute number is set in PG INDEX, enabling reference on a PG by PG basis in the case where reference is made from other application software or the like. Further, the PG update date and time information is recorded. At this time, in the case where there exists MNFI or IT_TXT compatible with this device (with which manufacture's code coincides), the update date and time information on the corresponding data is also set.

Information unique to each manufacturer is set in MNFI. Start information is set so as to enable playback from the beginning in PG_RSM_INF.

In step S182, a VOB type (information CELLI indicating a streamer) is set in CELL_TY. "0" is set in EX_C_CAT. A VOBI number to be referred to is set, playback start PTM and playback end PTM are set, and the number of EPIs (generated every predetermined time) is set, respectively.

In step S184, "0" is set in EX_C_POSIT.

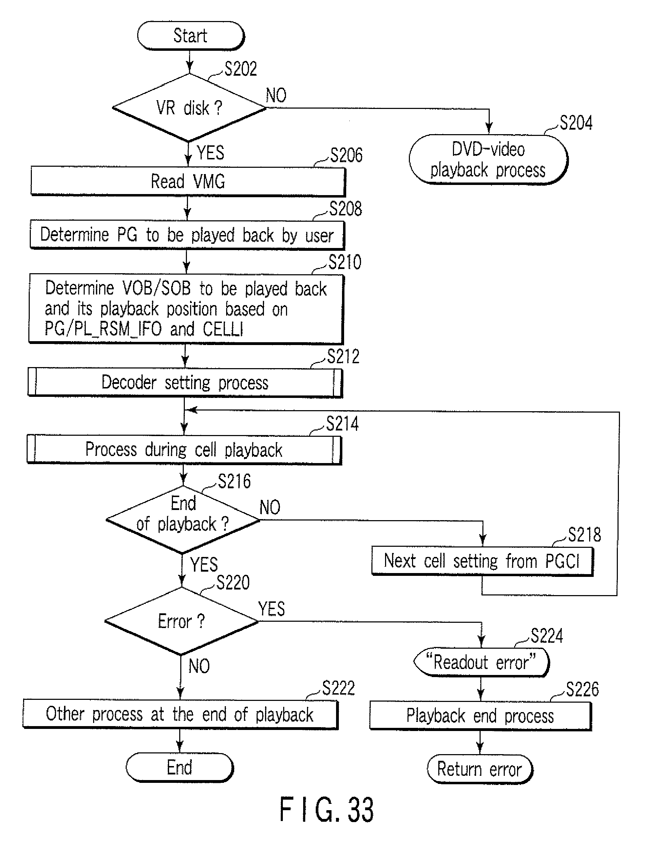

FIG. 33 is a flow showing the whole playback operation of the recorder.

In step S202, a file system of the disk is read out, and it is determined whether or not recorded data is present. When the determination result is negative, a message "No recording" is displayed, and the process is terminated. When the determination result is affirmative, it is determined whether or not a recordable disk (DVD-R/RW/RAM) for video recording exists.

When the determination result is negative, the fact is notified and processing goes to a DVD video playback process (step S204).

When the determination result is affirmative, processing goes to step S206 in which a VMG file is read, and then, processing goes to step S208 in which a program and cells to be played back are determined (by the user selection). Here, when playback of recording order has been selected, playback is carried out in accordance with ORG_PGCI. When playback is carried out on a program by program basis, playback is carried out in accordance with UD_PGC of a number corresponding to a program to be played back.

In step S210, VOB/SOB to be played back are determined on the basis of title information to be played back, resume information (PL_RSM_IFO, PG_RSM_IFO) and cell information CELLI, and its playback position (playback start PTM), etc. Then, a file pointer (logical address) for starting playback is determined from the playback start PTM.

In step S212, settings of the decoder units 156, 158, and 160 are provided, and preparation for playback is carried out based on a value of STI. In addition, APS on/off, APS type and the like are set at the video decoder unit 156 from CCI included in CTL_PACK, and CGMSA is set to the video decoder unit 156 by means of digital copy control. Further, when a digital output (such as IEEE 1394 or Internet) is present, "0" is set for scramble ON or output disable or "1" is set for output IC (IEEE 1394 interface 128) based on a value of -EPN. At this time, in the case where a frame for starting playback is not I-picture, the immediately preceding I-picture is read out, and decoding is started therefrom. Then, a display is started when the target frame has been reached, and general playback is started.

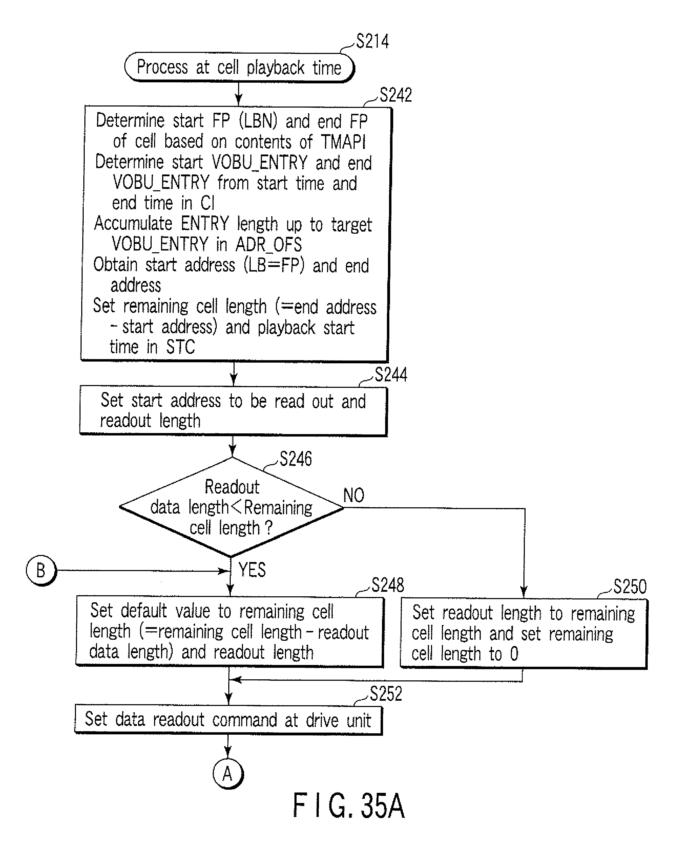

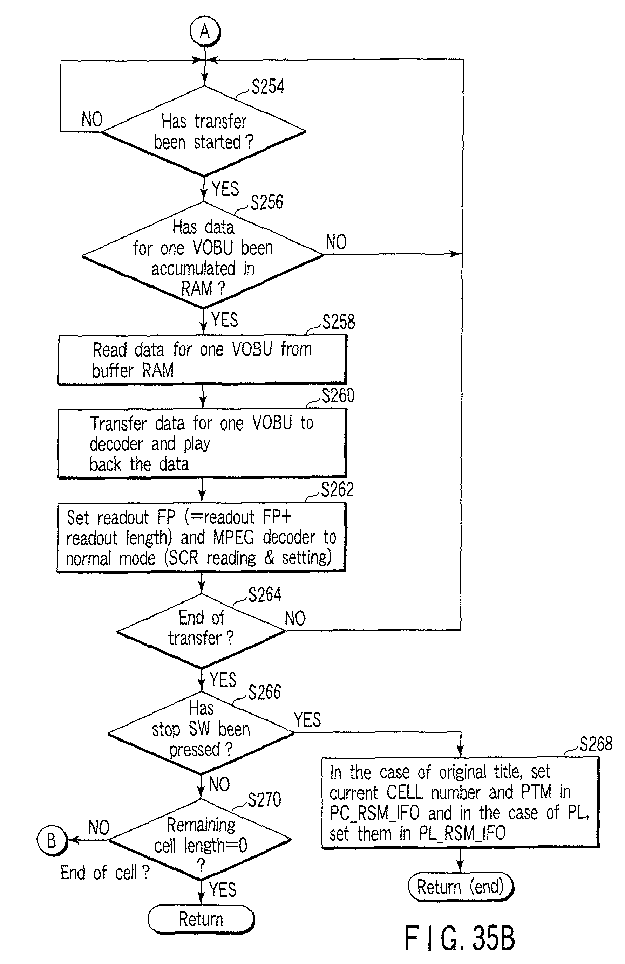

In step S214, a cell playback process (the detail is shown in FIG. 35) is carried out.

In step S216, it is determined whether or the end of playback occurs. When the determination result is affirmative, processing goes to step 220 in which an error check is made. When an error occurs, processing goes to step S224 in which the fact is displayed. Then, processing goes to step S226 in which the playback end process is carried out, and the process is terminated as an error.

When the determination result is negative in step S220, processing goes to step S222 in which other playback end process is carried out, and the operation is terminated.

When the end of playback is not determined in step S216, processing goes to step S218 in which a next cell is determined from PGCI, and it is determined whether or not decoder setting has been changed. When the check result is affirmative, a changed attribute is set in a decoder such that the decoder setting is changed in a next sequence end code.

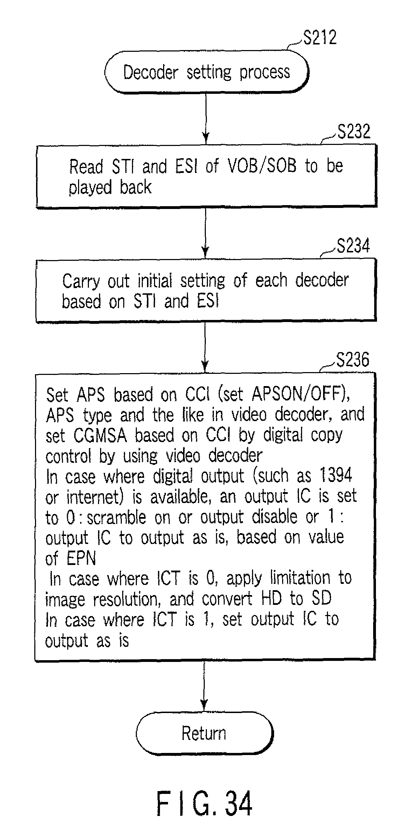

FIG. 34 shows a detail of a decoder setting process (step S212) from among the whole playback operation shown in FIG. 33.

In step S232, attribute information (STI or ESI) on EVOB/ESOB to be played back is read. It is determined whether or not a recorder compatible format exists. When the check result is affirmative, a mute is set.

In step S234, the initial settings of the decoder units 156, 158, and 160 are performed based on STI or EST.

In step S236, APS setting is provided to the video decoder unit 156 based on CCI included in CTL PACK (APS on/off, APS type, and the like are set), and CGMSA setting is provided to the video decoder unit 156 by means of digital copy control. Moreover, when a digital output (such as IEEE 1394 or Internet) is present, "0" is set for scramble ON or output disable or "1" is set intact for output IC based on a value of EPN. When ICT is "0", a limitation is applied to image resolution, and HD is converted to SD. When the ICT is "0", an output IC is set intact for output, and the process is terminated.

FIGS. 35A and 35B show a detail of a cell playback process (step S214) from among the whole playback operation shown in FIG. 33.

In step S242, cell start FP (LBN) and cell end FP are determined based on the contents of TMAPI, and further, start SOBU_ENTRY and end SOBU_ENTRY are determined from the start time and the end time in CELLI. Then, a data length of ENTRY up to SOBU_ENTRY is stored in ADR_OFS; and a start address (LB = FP) and an end address are obtained. The remaining cell length is defined as a value obtained by subtracting the start address from the end address, and the playback start time is set in the STC unit 110. PID to be played back is determined, and is set in a decoder (STB, digital tuner).

In step S244, a readout process during playback is executed, and a start address to be read out and a readout length (size) are determined by a start file pointer.

In step S246, a readout data length (readout unit size) and the remaining cell length are compared with each other.

When the remaining cell length is large, processing goes to step S248 in which a value obtained by subtracting a readout data length (readout unit size) from the remaining cell length is set at the remaining cell length, and the readout length is set at a default value. When the remaining cell length is small, processing goes to step S250 in which the readout length is set at the remaining cell length, and the remaining cell length is set to 0.

After steps S248 and S250, processing goes to step S252 in which the readout length is set at a length of a readout unit, and a readout address, a readout length, and a read command are set at the drive unit 116.

When the data readout start is detected in step S254, processing goes to step S256 in which the recorder waits until data for one EVOBU has been stored in a buffer RAM (not shown) in the drive unit 116. After the data has been stored, processing goes to step S258 in which a process of transferring the data from the buffer RAM to the decoder unit 104 is carried out, and the transferred data is played back in step S260. Then, processing goes to step S262 in which readout FP readout length is set at the readout FP, and a current mode is set at an MPEG decoder normal mode (SCR readout & setting).

In step S264, it is determined whether or not transfer to the decoder has terminated. When the check result is affirmative, processing goes to step S266.

In step S266, it is determined whether or not a stop switch SW has been pressed. When the stop switch is pressed, processing goes to step S268 in which the current cell number and PTM are set (stored) in cancellation information PG RSM IFO in the case of an original title or in cancellation information PL_RSM_IFO in the case of play list (PL) playback, and a terminating process is carried out.

When the stop switch SW is not pressed in step S266, processing goes to step S270 in which the remaining cell length is checked. When 0 is not set, processing returns to step S248, and when 0 is set, the process is terminated.

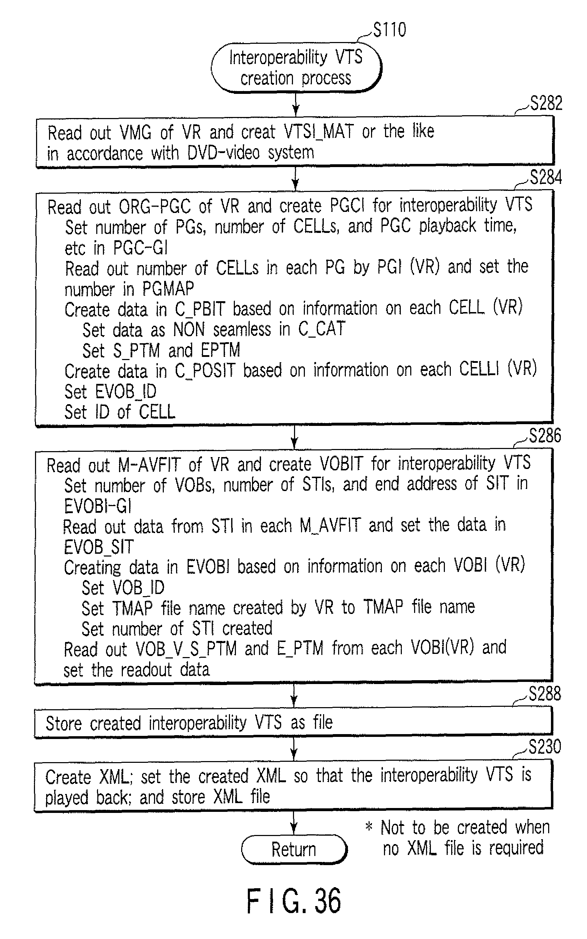

FIG. 36 is a flowchart of a process of creating interoperability VTS (step S110 in FIG. 28B) so as to enable playback of contents of video recording by a DVD ROM player.

In step S282, video recording VMG is read, and VTS_MAT or the like is created in accordance with a DVD video system.

In step S284, video recording ORG-PGCI is read, and interoperability VTS_PGCI is created. That is, the number of programs, the number of cells, a PGC playback time and the like are set in PGC_GI. For PGMAP, the number of cells is read out from PGI (video recording) and set in each program. Data is created in C_PBIT based on information on each CELLI (video recording). That is, non-seamless is set in C_CAT. Then, S_PTM and EPTM are set. Further, data is created in C_POSIT based on information on each CELLI (video recording). That is, EVOB_ID is set and a cell ID is set.

In step S286, M_AVFIT of VR is read out, and VOBIT for interoperability VTS is created. That is, the number of VOBs, the number of STIs, and an SIT end address are set in EVOBI_GI. Data is read out from STI included in each M_AVFIT and set in EVOB_SIT. Data is created in EVOBI based on information on each VOBI (video recording). VOB_ID is set. A TMAP file name (or file number) created by video recording is set for a TMAP file name (the TMAP file is used in common with video recording). The number of the created STI is set. VOB_V_S_PTM and E_PTM are read out from each VOBI (video recording) and set.

In step S288, the created interoperability VTS is stored as a file.

In step S290, an XML file is created, the interoperability VTS is updated so as to be played back, and an XML file is stored. Step S290 is not executed in the case where there is no need for creating the XML file.

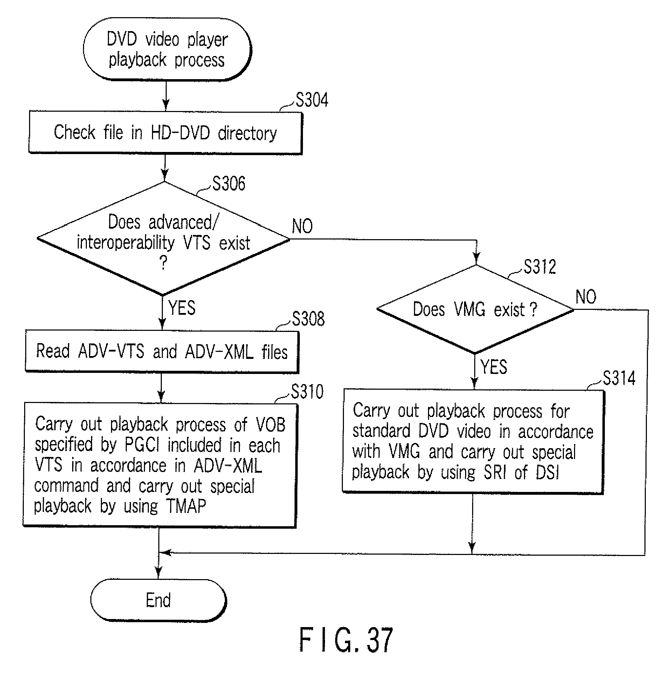

A description of the operation of a recording and playback apparatus (DVD recorder) has now been completed. Now, an operation in the case where a DVD VR disk is played back by a DVD ROM player will be described with reference to FIG. 37. In this case, video recording object playback is carried out by utilizing interoperability VTS.

In step S304, a file system in a DVD_HD directory is checked. In step S306, it is determined whether or not interoperability VTS (or advanced VTS equivalent thereto) exists. When there is no interoperability VTS, processing goes to step S312 in which it is determined whether or not HDVMG exists. When the interoperability VTS exists, processing goes to step S314 in which a standard HD DVD video playback process is carried out in accordance with HDVMG. In this case, SRI of a DSI packet is used for special playback.

When HDVMG does not exist in step S312, there is no object to be played back, and the process is terminated.

When the interoperability VTS (or advanced VTS equivalent thereto) exists in step S306, processing goes to step S310 in which an XML file is read out, and a process of playing back VOB specified by PGCI in each VTS is carried out in accordance with a command stored in this file. In this case, TMAP is used for special playback.

Now, an authoring process for HD DVD video will be briefly described here.

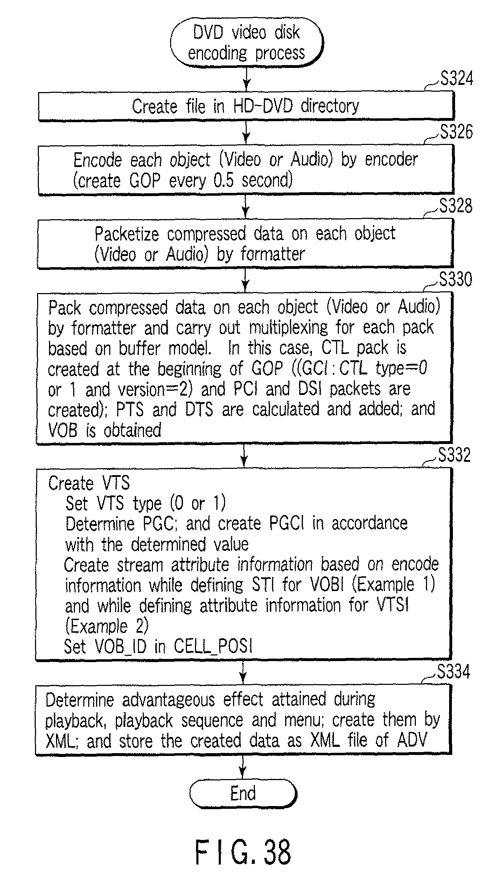

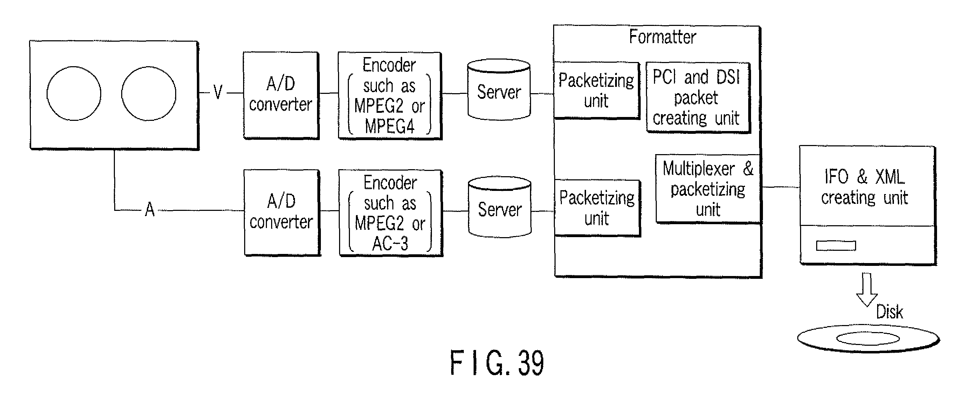

FIG. 38 is a flowchart showing this process, and FIG. 39 is a conceptual view showing an authoring system.

As shown in FIG. 39, a video signal and an audio signal are digitized, respectively, each of which is encoded by an encoder, and is stored in a server. A formatter unit reads video and audio encoded data and creates (packetizes) a GCI/PCI/DSI packet. Then, this formatter unit carries out packing and multiplexing considering a buffer model or the like, creates an IFO file and an XML file, and records these files in the disk.

With respect to an example of DVD video authoring, the authoring process is configured as shown in FIG. 38 and the authoring system is configured as shown in FIG. 39. In step S324, as many files as possible in the HD directory are created.

In step S326, each of objects of the video signal and the audio signal is encoded (compressed) by the encoder. GOP is created every 0.5 seconds.

In step S328, encoded data (compressed data) on each of the objects of the video signal and the audio signal is packetized by the formatter unit (the GCI/PCI/DSI packet is created).

In step S330, encoded data (compressed data) on each of the objects of the video signal and the audio signal is packetized by the formatter unit, and the packetized signals are multiplexed for each pack based on a buffer model. In this case, CTL_PACK is created at the beginning of GOP (GCI: CTL type = "0" or "1", version = "2", and PCI and DSI packets are inserted), PTS and DTS are calculated and added, thereby obtaining VOB.

In step S332, VTS is created. A VTS type is "0" or "1". PGC is determined, and PGCI is created in accordance with the determined value. Stream attribute information is created as STI in VOBI (Example 1), and is created as attribute information in VTSI (Example 2) based on encode information. VOB_ID is set in CELL_POSI.

In step S334, advantageous effect attained during playback, a playback sequence and a menu are determined, an XML file for describing these items is created, and the created file is stored as an XML (or Java) file of the advanced VTS.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein.

Although the present invention has been described using a DVD as an example for the realization of the present invention it should be stressed that the present invention is not limited to this kind of information storage medium and that other kinds of information storage media not fulfilling the DVD specification can be used to implement the concept of the present invention as well.

## Claims

1. An information recording medium to be played back by an apparatus for playing back first object data (131) recorded in accordance with a first standard, the information recording medium **characterized by** comprising:
a management area (130); and
a data area (131, 132), wherein
the data area (131, 132) is configured to store second object data (132) recorded in accordance with a second standard which is different from the first standard, and
the management area (130) manages a record content of at least the second object data.

2. A playback apparatus for producing data from an information recording medium which has first object data (131) recorded in accordance with a first standard and has a management area (130) and a data area (131, 132), the data area being configured to store second object data (132) recorded in accordance with a second standard which is different from the first standard, and the management area (130) managing a record content of at least the second object data, the playback apparatus comprising:
a play back unit which plays back at least the second object data (132).

3. A recording apparatus for recording data to an information recording medium which has first object data (131) recorded in accordance with a first standard and has a management area (130) and a data area (131, 132), the data area (131, 132) being configured to store second object data (132) recorded in accordance with a second standard which is different from the first standard, and the management area (130) managing a record content of at least the second object data (132), the recording apparatus comprising:
a recording unit which records at least the second object data (132) to the information recording medium.
